(19) Europäisches Patentamt / European Patent Office / Office européen des brevets

(11) **EP 4 647 523 A1**

(12) **EUROPEAN PATENT APPLICATION**
published in accordance with Art. 153(4) EPC

(43) Date of publication:
**12.11.2025 Bulletin 2025/46**

(21) Application number: **24738649.3**

(22) Date of filing: **05.01.2024**

(51) International Patent Classification (IPC):
$C22C\ 38/00^{(2006.01)}$  $C22C\ 38/60^{(2006.01)}$
$H01F\ 1/147^{(2006.01)}$  $C21D\ 8/12^{(2006.01)}$
$C21D\ 9/46^{(2006.01)}$

(52) Cooperative Patent Classification (CPC):
**C22C 38/00; C22C 38/60; H01F 1/147;** C21D 8/12;
C21D 9/46; Y02P 10/20

(86) International application number:
**PCT/JP2024/000087**

(87) International publication number:
**WO 2024/147359 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 JP 2023001330**

(71) Applicant: NIPPON STEEL CORPORATION
Chiyoda-ku
Tokyo 100-8071 (JP)

(72) Inventors:
• **ATSUMI, Haruhiko**
Tokyo 100-8071 (JP)
• **YAMAGATA, Ryutaro**
Tokyo 100-8071 (JP)

• **KATAOKA, Takashi**
Tokyo 100-8071 (JP)
• **KUNITA, Yuki**
Tokyo 100-8071 (JP)
• **YANAI, Hironobu**
Tokyo 100-8071 (JP)
• **TOMITA, Yuki**
Tokyo 100-8071 (JP)
• **KASHIDA, Yuji**
Tokyo 100-8071 (JP)
• **MATSUSHITA, Kohya**
Tokyo 100-8071 (JP)

(74) Representative: **Vossius & Partner
Patentanwälte Rechtsanwälte mbB
Siebertstrasse 3
81675 München (DE)**

(54) **GRAIN-ORIENTED ELECTRICAL STEEL SHEET**

(57)    Provided is a grain-oriented electrical steel sheet that has sufficient magnetic flux density and excellent iron loss characteristics not only before but also after magnetic domain refinement treatment. A base steel sheet of the grain-oriented electrical steel sheet according to the present embodiment contains, in mass%, Si: 2.5 to 4.5%, Mn: 0.01 to 1.00%, N: 0.010% or less, C: 0.010% or less, sol. Al: 0.010% or less, one or more kinds of element selected from a group consisting of S and Se: 0.010% or less in total, and Ti: 0.010% or less, and the remainder including Fe and impurities. When, by measuring crystal orientations at measurement points on the surface that are located at a pitch of 2 mm in first and second directions perpendicular to each other using an X-ray diffraction method, misorientations of grain boundaries of crystal grains are obtained, a total length of the grain boundaries of the crystal grains is defined as La, and a total length of grain boundaries with misorientations of 1 to 5° is defined as Ls, Formula (1):

$$Ls/La \geq 0.140 \quad (1)$$

is satisfied, and a magnetic flux density $B_8$ is 1.910 T or more.

FIG.8

**Description**

TECHNICAL FIELD

The present disclosure relates to a grain-oriented electrical steel sheet.

BACKGROUND ART

Grain-oriented electrical steel sheets serve as soft magnetic materials, and are used as an iron core material for electrical equipment such as a transformer. Grain-oriented electrical steel sheets are composed of crystal grains (Goss-oriented grains) oriented in the {110}<001> orientation, called the Goss orientation. The sizes of Goss-oriented grains are in the order of mm. Grain-oriented electrical steel sheets are produced by preferentially growing Goss-oriented grains through a phenomenon called secondary recrystallization.

Excellent magnetic properties (high magnetic flux density and low iron loss) are required for grain-oriented electrical steel sheets. For grain-oriented electrical steel sheets, the higher the degree of alignment of Goss-oriented grains is, the more excellent the magnetic properties can be.

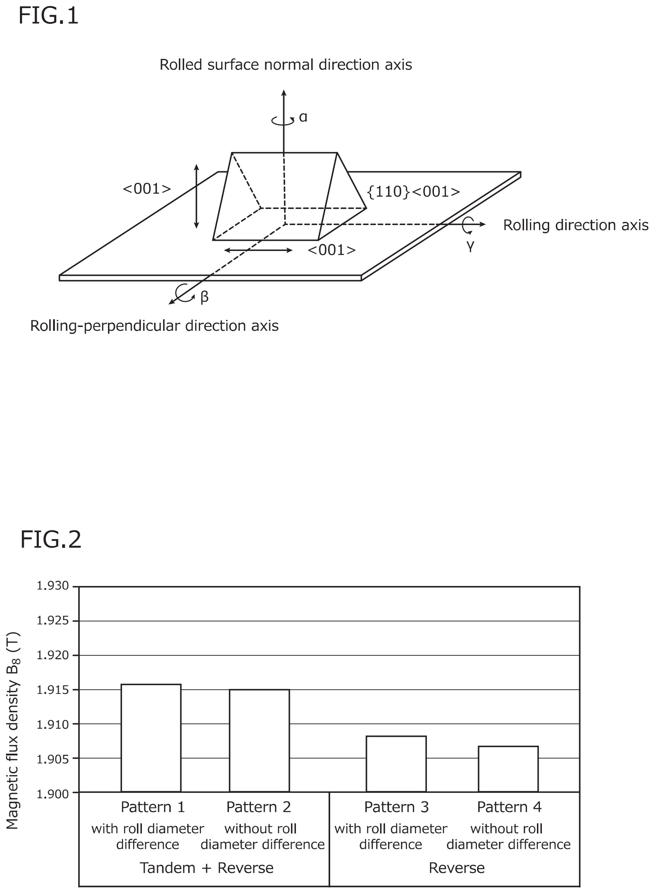

The degree of alignment of Goss-oriented grains due to secondary recrystallization can be evaluated based on deviation angles from the ideal Goss orientation. FIG. 1 is a schematic diagram of deviation angles from the ideal Goss orientation. Referring to FIG. 1, the deviation angles include: an $\alpha$ angle, which is the angle of rotation around a rolled surface normal direction axis extending in a normal direction of a rolled surface of a grain-oriented electrical steel sheet; a $\beta$ angle, which is the angle of rotation around a rolling-perpendicular direction axis orthogonal to a rolling direction axis and the rolled surface normal direction axis; and a $\gamma$ angle, which is the angle of rotation around the rolling direction axis. Accordingly, the relationship between the $\alpha$, $\beta$, and $\gamma$ angles, and the magnetic properties (magnetic flux density and iron loss) of a grain-oriented electrical steel sheet has been studied conventionally.

In a grain-oriented electrical steel sheet proposed in JP 2018-48377A (Patent Literature 1), a region where the root mean square of the $\alpha$ and $\beta$ angles is 5.0° or less and the $\beta$ angle is 0.50° or less has an area ratio of 20% or less. This suppresses the deterioration of iron loss, according to Patent Literature 1.

In a grain-oriented electrical steel sheet proposed in JP 2001-192785A (Patent Literature 2), the average $\alpha$ angle is 6° or less, and the amount $<\sigma(\beta)>$ obtained by averaging the standard deviations $\sigma(\beta)$ of a distribution of $\beta$ angles in the rolling-perpendicular direction (width direction) is 2° or less. This makes the $\beta$ angles uniform within the steel sheet and suppresses the deterioration of iron loss, according to Patent Literature 2.

It is known that when the $\alpha$ and $\beta$ angles are small, the effect of the $\gamma$ angle on magnetic properties is small.

CITATION LIST

PATENT LITERATURES

Patent Literature 1: JP 2018-48377A
Patent Literature 2: JP 2001-192785A

SUMMARY OF INVENTION

TECHNICAL PROBLEM

As described above, the grain-oriented electrical steel sheets proposed in Patent Literatures 1 and 2 attempt to improve iron loss by adjusting the deviation angle from the ideal Goss orientation. Meanwhile, a method is known that reduces the iron loss of grain-oriented electrical steel sheets through magnetic domain refinement treatment. For grain-oriented electrical steel sheets, not only an improvement in iron loss characteristics before magnetic domain refinement treatment, but also an improvement in iron loss characteristics after the magnetic domain refinement treatment may sometimes be required. Patent Literatures 1 and 2 do not consider how to improve the iron loss characteristics after the magnetic domain refinement treatment.

It is an object of the present disclosure to provide a grain-oriented electrical steel sheet that has sufficient magnetic flux density and excellent iron loss characteristics not only before but also after magnetic domain refinement treatment.

SOLUTION TO PROBLEM

A grain-oriented electrical steel sheet according to the present disclosure includes

a base steel sheet,
wherein a chemical composition of the base steel sheet contains, in mass%:

Si: 2.5 to 4.5%,
Mn: 0.01 to 1.00%,
N: 0 to 0.010%,
C: 0 to 0.010%,
sol. Al: 0 to 0.010%,
one or more kinds of element selected from a group consisting of S and Se: 0 to 0.010% in total,
Ti: more than 0 to 0.010%,
Ni: 0 to 1.00%,
Cr: 0 to 1.00%,
Cu: 0 to 1.00%,
P: 0 to 0.50%,
Mo: 0 to 0.10%,
Sn: 0 to 0.50%,
Sb: 0 to 0.50%,
Bi: 0 to 0.0500%, and
the remainder including Fe and impurities,

when, by measuring crystal orientations at measurement points on a surface of the grain-oriented electrical steel sheet that are located at a pitch of 2 mm in a first direction and in a second direction perpendicular to the first direction using an X-ray diffraction method, misorientations of grain boundaries of crystal grains are obtained, a total length of the grain boundaries of the crystal grains is defined as La, and a total length of grain boundaries with misorientations of 1 to 5° is defined as Ls, Formula (1):

$$Ls/La \geq 0.140 \qquad (1)$$

is satisfied, and
a magnetic flux density $B_8$ is 1.910 T or more.

ADVANTAGEOUS EFFECTS OF INVENTION

The grain-oriented electrical steel sheet of the present disclosure has sufficient magnetic flux density and excellent iron loss characteristics not only before but also after magnetic domain refinement treatment.

BRIEF DESCRIPTION OF DRAWINGS

[FIG. 1] FIG. 1 is a schematic diagram of deviation angles from the ideal Goss orientation.
[FIG. 2] FIG. 2 is a graph of magnetic flux densities $B_8$ (T) of grain-oriented electrical steel sheets produced by executing cold rolling processes of Patterns 1 to 4.
[FIG. 3] FIG. 3 is a graph of iron losses $W_{17/50}$ (W/kg) before magnetic domain refinement treatment in Patterns 1 to 4.
[FIG. 4] FIG. 4 is a graph of iron losses $W_{17/50}$ (W/kg) after magnetic domain refinement treatment in Patterns 1 to 4.
[FIG. 5] FIG. 5 is a graph of $\alpha$ angles (°) and $\beta$ angles (°) in Patterns 1 to 4.
[FIG. 6] FIG. 6 is a graph of average crystal grain sizes in Patterns 1 to 4.
[FIG. 7] FIG. 7 is a diagram showing examples of analysis results of misorientation angles of the grain-oriented electrical steel sheet.
[FIG. 8] FIG. 8 is a graph of small-angle grain boundary ratios $R_{SGB}$ in Patterns 1 to 4.
[FIG. 9] FIG. 9 is a perspective view of a grain-oriented electrical steel sheet according to the present embodiment.
[FIG. 10] FIG. 10 is a schematic diagram of a tandem rolling mill.
[FIG. 11] FIG. 11 is a schematic diagram of a multi-stage rolling mill that is used in a reverse rolling process.

DESCRIPTION OF EMBODIMENTS

The inventors of the present disclosure studied a grain-oriented electrical steel sheet that has sufficient magnetic flux density and excellent iron loss characteristics not only before but also after magnetic domain refinement treatment. As a result, the following findings were obtained.

The inventors of the present disclosure first produced grain-oriented electrical steel sheets using different production methods and investigated, for each of the grain-oriented electrical steel sheets, the magnetic flux density $B_8$ (T), iron loss $W_{17/50}$ (W/kg) before magnetic domain refinement treatment, and iron loss $W_{17/50}$ (W/kg) after the magnetic domain refinement treatment. Specifically, the following experiments were conducted.

A plurality of steel slabs were prepared that have a chemical composition containing, in mass%, Si: 3.3%, Mn: 0.08%, N: 0.009%, C: 0.074%, sol. Al: 0.026%, S: 0.023%, and Ti: 0.002%, the remainder being Fe and impurities.

A hot rolling process was performed on the steel slabs. Specifically, the steel slabs were heated to 1340°C in a heating furnace. Hot rolling was performed on the heated steel slabs to produce hot-rolled steel sheets with a thickness of 2.3 mm.

The hot-rolled steel sheets were subjected to a hot-rolled sheet annealing process at a hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm.

Cold rolling was performed in the following four patterns.

(Pattern 1) Tandem rolling + reverse rolling with roll diameter difference

The hot-rolled steel sheets after the hot-rolled sheet annealing process were rolled in a tandem rolling mill with work rolls of an average diameter of 450 mm to produce steel sheets with a thickness of 0.8 mm. Then, reverse rolling was performed on the steel sheets in a multi-stage rolling mill with work rolls of an average diameter of 100 mm to produce cold-rolled steel sheets with a thickness of 0.22 mm. Note that the upper and lower work rolls of the multi-stage rolling mill have a roll diameter difference of 2.0 mm. In other words, a roll diameter difference is provided between the upper and lower work rolls during reverse rolling.

(Pattern 2) Tandem rolling + reverse rolling without roll diameter difference

The hot-rolled steel sheets after the hot-rolled sheet annealing process were rolled in a tandem rolling mill with work rolls of an average diameter of 450 mm to produce steel sheets with a thickness of 0.8 mm. Then, reverse rolling was performed on the steel sheets in a multi-stage rolling mill with work rolls of an average diameter of 100 mm to produce cold-rolled steel sheets with a thickness of 0.22 mm. Note that the upper and lower work rolls of the multi-stage rolling mill have a roll diameter difference of 0.5 mm. In other words, substantially no roll diameter difference is provided between the upper and lower work rolls during reverse rolling.

(Pattern 3) Only reverse rolling with roll diameter difference

Reverse rolling was performed on the hot-rolled steel sheets after the hot-rolled sheet annealing process in a multi-stage rolling mill with work rolls of an average diameter of 100 mm to produce cold-rolled steel sheets with a thickness of 0.22 mm. In other words, in Pattern 3, in contrast to Patterns 1 and 2, no tandem rolling was performed before the reverse rolling. Note that the upper and lower work rolls of the multi-stage rolling mill have a roll diameter difference of 2.0 mm, and thus a roll diameter difference is provided between the upper and lower work rolls.

(Pattern 4) Only reverse rolling without roll diameter difference

Reverse rolling was performed on the hot-rolled steel sheets after the hot-rolled sheet annealing process in a multi-stage rolling mill with work rolls of an average diameter of 100 mm to produce cold-rolled steel sheets with a thickness of 0.22 mm. In other words, in Pattern 4, similar to Pattern 3, no tandem rolling was performed before the reverse rolling. Note that the upper and lower work rolls of the multi-stage rolling mill have a roll diameter difference of 0.5 mm, and thus substantially no roll diameter difference is provided between the upper and lower work rolls.

A decarburization annealing process was performed on the cold-rolled steel sheets after the cold rolling process of Patterns 1 to 4. Specifically, the temperature range of 400 to 800°C was increased to 870°C at 600°C/s, and then the decarburization annealing temperature of 830 to 950°C was held for 80 to 150 seconds. Then, the cold-rolled steel sheets were left to be cooled to room temperature, and decarburized annealed steel sheets were obtained.

An annealing separator composed mainly of MgO was applied to the surfaces of the decarburized annealed steel sheets. Then, finishing annealing was performed on the decarburized annealed steel sheets to which the annealing separator was applied to produce the finished annealed steel sheets. The finishing annealing temperature in the finishing annealing was 1100°C to 1200°C, and the holding time at the finishing annealing temperature was 5 to 30 hours. A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby insulating coatings were formed on the respective primary coatings. With the above-described production processes, grain-oriented electrical steel sheets were produced.

The chemical composition of the produced grain-oriented electrical steel sheets was a chemical composition containing, Si: 3.3%, Mn: 0.08%, N: <0.002%, C: 0.002%, sol. Al: <0.001%, S: <0.001%, and Ti: 0.002%, the remainder being Fe and impurities. Here, the numerical values with "<" each indicate that the standard curve of the analyzer was only up to the corresponding numerical value after the "<". Specifically, "<0.001%" indicates that the standard curve of the analyzer was only up to 0.001%.

The produced grain-oriented electrical steel sheets were subjected to a magnetic flux density measurement test, an iron loss evaluation test for the grain-oriented electrical steel sheets before magnetic domain refinement treatment, and an iron loss evaluation test for the grain-oriented electrical steel sheets after the magnetic domain refinement treatment, which are shown in the later-described examples.

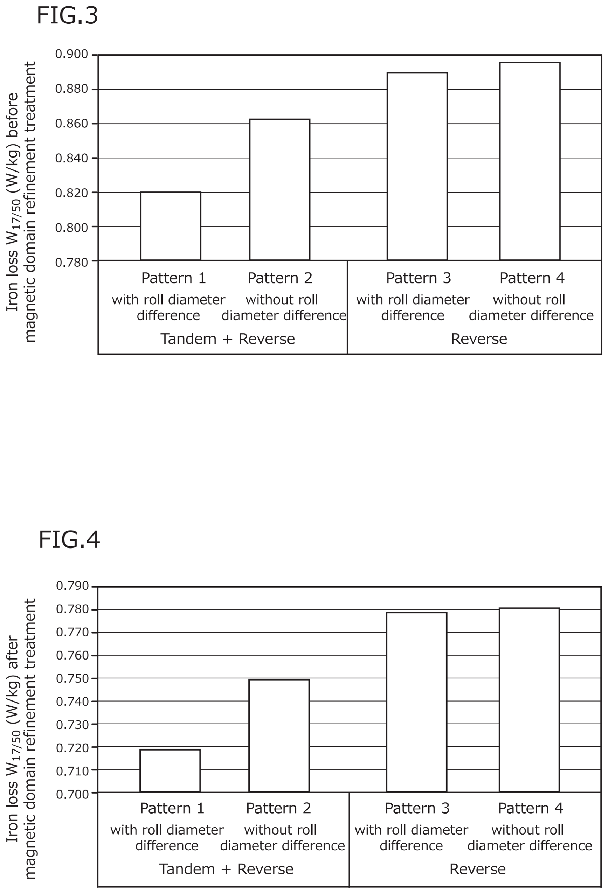

FIG. 2 is a graph of magnetic flux densities $B_8$ (T) in Patterns 1 to 4. FIG. 3 is a graph of iron losses $W_{17/50}$ (W/kg) before magnetic domain refinement treatment in Patterns 1 to 4. FIG. 4 is a graph of iron losses $W_{17/50}$ (W/kg) after the magnetic domain refinement treatment in Patterns 1 to 4.

Referring to FIG. 2, regarding the magnetic flux density $B_8$, the magnetic flux densities $B_8$ in Patterns 1 and 2 (where tandem rolling + reverse rolling were executed in the cold rolling process) were superior to those in Patterns 3 and 4 (where only reverse rolling was executed in the cold rolling process). On the other hand, the magnetic flux densities $B_8$ in Patterns 1 and 2 were equivalent.

On the other hand, regarding the iron loss, a significant difference was observed between Pattern 1 and Pattern 2. Specifically, referring to FIG. 3, regarding the iron loss $W_{17/50}$ before magnetic domain refinement treatment, the iron losses $W_{17/50}$ in Patterns 1 and 2 (where tandem rolling + reverse rolling were executed in the cold rolling process) were lower than the iron losses $W_{17/50}$ in Patterns 3 and 4 (where only reverse rolling was executed in the cold rolling process). Furthermore, comparing Pattern 1 and Pattern 2, the iron loss $W_{17/50}$ in Pattern 1 with a roll diameter difference was significantly lower than the iron loss $W_{17/50}$ in Pattern 2 without a roll diameter difference.

Also, regarding the iron loss after the magnetic domain refinement treatment, the same tendency was observed as in the iron losses before the magnetic domain refinement treatment. Specifically, referring to FIG. 4, the iron losses $W_{17/50}$ in Patterns 1 and 2 (where tandem rolling + reverse rolling were executed in the cold rolling process) were lower than the iron losses $W_{17/50}$ in Patterns 3 and 4 (where only reverse rolling was executed in the cold rolling process). Furthermore, comparing Pattern 1 and Pattern 2, the iron loss $W_{17/50}$ in Pattern 1 with a roll diameter difference was significantly lower than the iron loss $W_{17/50}$ in Pattern 2 without a roll diameter difference.

Based on the above results, Pattern 1, where tandem rolling and reverse rolling were performed in the cold rolling process and a roll diameter difference was provided in the reverse rolling, has an excellent magnetic flux density $B_8$ and an iron loss $W_{17/50}$ significantly lower than those in the other patterns. Therefore, by analyzing the structures of the grain-oriented electrical steel sheets produced in Pattern 1, the inventors of the present disclosure attempted to identify the configuration of a grain-oriented electrical steel sheet with sufficient magnetic flux density and excellent iron loss characteristics not only before but also after magnetic domain refinement treatment.

At first, the inventors of the present disclosure considered that α and β angles, which are the deviation angles from the ideal Goss orientation, affect iron loss, as described in Patent Literatures 1 and 2. Therefore, α and β angles in grain-oriented electrical steel sheets produced in Patterns 1 to 4 were obtained by the following method.

On the grain-oriented electrical steel sheets in Patterns 1 to 4, rectangular regions of 60 mm in the width direction and 250 mm in the rolling direction were defined as observation regions. X-ray diffraction using the Laue method was performed at measurement points (3906 points in total) located at intervals of 2 mm in the rolling direction and the width direction on each observation region. The spot diameter at the time of measurement was 1 mm.

X-ray diffraction was performed on 10 observation regions of the grain-oriented electrical steel sheet of each pattern to obtain α and β angles at each measurement point on the observation regions. The arithmetic mean value of the obtained α angles at the measurement points was defined as the α angle (°) of the corresponding pattern. Similarly, the arithmetic mean value of the obtained β angles at the measurement points was defined as the β angle (°) of the corresponding pattern.

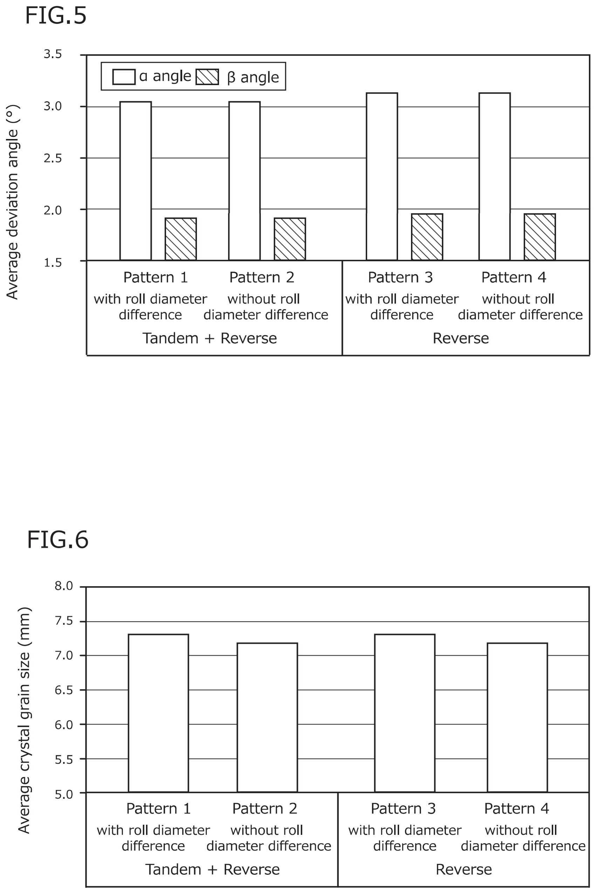

FIG. 5 is a graph of α angles (°) and β angles (°) in Patterns 1 to 4. Referring to FIG. 5, the α and β angles in Patterns 1 and 2 were slightly lower than those in Patterns 3 and 4, which correlated with the results of the magnetic flux densities $B_8$. However, the α and β angles in Pattern 1 were substantially the same as those in Pattern 2. Therefore, the improvement in iron loss characteristics of the grain-oriented electrical steel sheets in Pattern 1 did not correlate with the α

and $\beta$ angles.

Accordingly, the inventors of the present disclosure further investigated the correlation between iron loss, and other configurations of the grain-oriented electrical steel sheets that are different from the $\alpha$ and $\beta$ angles.

The inventors of the present disclosure investigated the relationship between the crystal grain size and iron loss of the grain-oriented electrical steel sheets in Pattern 1 to Pattern 4. Specifically, crystal orientation data obtained by the above-mentioned X-ray diffraction was used to identify a region constituted by grain boundaries with a misorientation angle of 1° or more and constituted by one or more measurement points, as a single crystal grain. The equivalent circle diameter of the identified crystal grain was determined. Here, an equivalent circle diameter means the diameter of a circle having the same area as the area of a crystal grain. The arithmetic mean value of the equivalent circle diameters of the obtained crystal grains was defined as the average crystal grain size (mm) in the corresponding pattern.

FIG. 6 is a graph of average crystal grain sizes in Patterns 1 to 4. Referring to FIG. 6, the average crystal grain sizes in Patterns 1 to 4 were substantially the same and did not correlate with iron losses.

As described above, no correlation was found between the $\alpha$ angle, the $\beta$ angle, and the average crystal grain size on one hand, and iron loss on the other hand. Therefore, the inventors of the present disclosure focused on misorientation angles of crystal grains adjacent to each other, among the crystal grains constituting a grain-oriented electrical steel sheet, as a new viewpoint of the configuration of the grain-oriented electrical steel sheet.

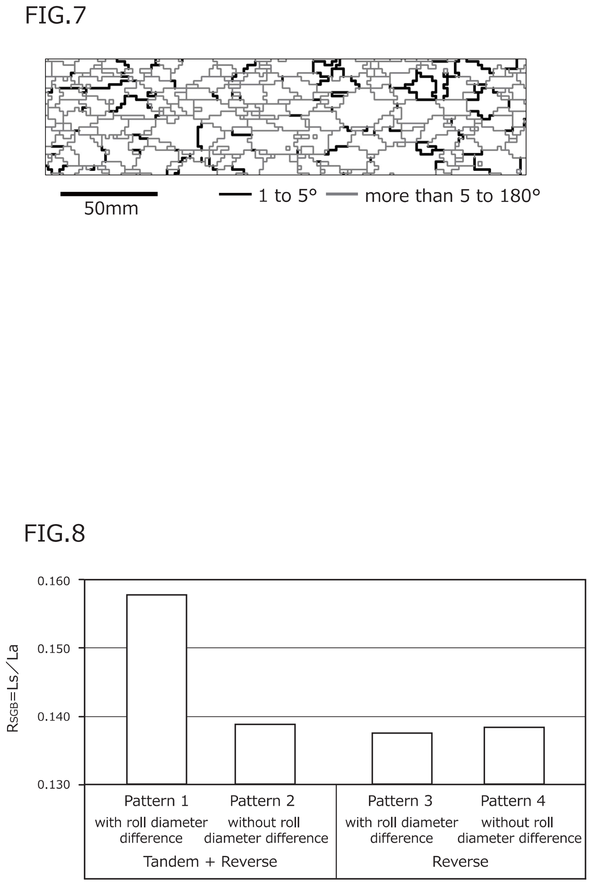

Specifically, the misorientation angles of the crystal grains in the steel sheet were obtained by a later-described method. FIG. 7 is a diagram showing examples of analysis results of misorientation angles at grain boundaries of a grain-oriented electrical steel sheet. Referring to FIG. 7, closed regions surrounded by grain boundaries are crystal grains. Among the grain boundaries, the grain boundaries in bold lines are grain boundaries with misorientation angles of 1 to 5°. In the following description, a grain boundary with a misorientation angle of 1 to 5° is referred to as a "small-angle grain boundary". The portion of the grain boundaries indicated by lines other than the bold lines are grain boundaries with a misorientation angle of more than 5°.

The total length of the grain boundaries of crystal grains in the observation region was defined as La (mm). Furthermore, among the grain boundaries of the crystal grains in the observation region, the total length of grain boundaries with very small misorientation angles of 1 to 5° (small-angle grain boundaries) was defined as Ls (mm). Then, the small-angle grain boundary ratio $R_{SGB}$ was defined as follows.

$$R_{SGB} = Ls/La$$

FIG. 8 is a graph of the small-angle grain boundary ratios $R_{SGB}$ in Patterns 1 to 4. Referring to FIG. 8, the small-angle grain boundary ratio $R_{SGB}$ in Pattern 1 was significantly larger than those in the other Patterns 2 to 4. The results in FIG. 8 correlated with the iron loss results.

Based on the results of the study above, the inventors of the present disclosure considered that the greater the percentage of small-angle grain boundaries in grain boundaries is, the lower the iron loss is. The reason for this is not clear, but the inventors of the present disclosure consider as follows.

The crystal orientations of grain-oriented electrical steel sheets are aligned with the Goss orientation. Therefore, most of the misorientation angles at the grain boundaries of the crystal grains are 15° or less. In steel sheets constituted by grain boundaries with small misorientation angles, if the percentage of small-angle grain boundaries with even smaller misorientation angles of 1 to 5° increases, the misorientation angles of crystal grains adjacent to each other will often be smaller. Therefore, a variation in the local magnetic flux density distribution within the steel sheet is suppressed and the magnetic flux density distribution is homogenized. It is conceivable that such homogenization of the magnetic flux density distribution results in excellent iron loss characteristics before and after magnetic domain refinement treatment.

Note that there is also a possibility that excellent iron loss characteristics before and after magnetic domain refinement treatment are obtained due to a mechanism different from the mechanism of this estimation. However, it has been proven in the later-described examples that increasing the small-angle grain boundary ratio $R_{SGB}$ can result in excellent iron loss characteristics.

Based on the above findings, the inventors of the present disclosure have completed grain-oriented electrical steel sheets of the present embodiment that have the following configurations.

A grain-oriented electrical steel sheet according to a first configuration includes

a base steel sheet,
wherein a chemical composition of the base steel sheet contains, in mass%:

Si: 2.5 to 4.5%,
Mn: 0.01 to 1.00%,
N: 0 to 0.010%,
C: 0 to 0.010%,

EP 4 647 523 A1

sol. Al: 0 to 0.010%,
one or more kinds of element selected from a group consisting of S and Se: 0 to 0.010% in total,
Ti: more than 0 to 0.010%,
Ni: 0 to 1.00%,
Cr: 0 to 1.00%,
Cu: 0 to 1.00%,
P: 0 to 0.50%,
Mo: 0 to 0.10%,
Sn: 0 to 0.50%,
Sb: 0 to 0.50%,
Bi: 0 to 0.0500%, and
the remainder including Fe and impurities,

when, by measuring crystal orientations at measurement points on a surface of the grain-oriented electrical steel sheet that are located at a pitch of 2 mm in a first direction and in a second direction perpendicular to the first direction using an X-ray diffraction method, misorientations of grain boundaries of crystal grains are obtained, a total length of the grain boundaries of the crystal grains is defined as La, and a total length of grain boundaries with misorientations of 1 to 5° is defined as Ls, Formula (1):

$$Ls/La \geq 0.140 \qquad (1)$$

is satisfied, and
a magnetic flux density $B_8$ is 1.910 T or more.

A grain-oriented electrical steel sheet according to a second configuration is directed to the grain-oriented electrical steel sheet according to the first configuration,
wherein the chemical composition of the base steel sheet contains one or more kinds of element selected from the group consisting of, in mass%:

Ni: 0.01 to 1.00%,
Cr: 0.01 to 1.00%,
Cu: 0.01 to 1.00%,
P: 0.01 to 0.50%,
Mo: 0.01 to 0.10%,
Sn: 0.01 to 0.50%,
Sb: 0.01 to 0.50%, and
Bi: 0.0001 to 0.0500%.

A grain-oriented electrical steel sheet according to a third configuration is directed to the grain-oriented electrical steel sheet according to the first or second configuration, further including:
a plurality of linear heat-affected zones or grooves formed in the surface of the grain-oriented electrical steel sheet, the plurality of linear heat-affected zones or grooves extending in a linear fashion and being aligned in a direction perpendicular to the extending direction.
Hereinafter, the grain-oriented electrical steel sheet of the present embodiment will be described. Note that "%" with respect to elements means mass percent unless otherwise noted.

[Regarding Configuration of Grain-Oriented Electrical Steel Sheet]

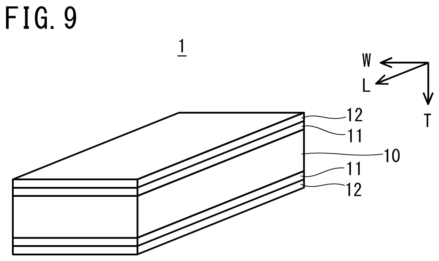

FIG. 9 is a perspective view of a grain-oriented electrical steel sheet according to the present embodiment. The direction L in the figure means the rolling direction of the grain-oriented electrical steel sheet. The direction W means the rolling-perpendicular direction (sheet width direction) of the grain-oriented electrical steel sheet. The direction T means the rolled surface normal direction (sheet thickness direction) of the grain-oriented electrical steel sheet.
Referring to FIG. 9, the grain-oriented electrical steel sheet 1 according to the present embodiment includes a base steel sheet 10, an underlayer coating 11, and a secondary coating 12. The underlayer coating 11 is formed on the base steel sheet 10. In FIG. 9, the underlayer coating 11 is formed on a surface of the base steel sheet 10 while being in direct contact with the surface of the base steel sheet 10. The underlayer coating 11 is either a primary coating composed mainly of forsterite, or an intermediate layer composed mainly of oxides such as silica and alumina. When placing

8

importance on the reduction of iron loss, the primary coating is used as the underlayer coating 11. When placing importance on punching workability, the intermediate layer is used as the underlayer coating 11. The underlayer coating 11 is a well-known coating.

The secondary coating 12 is formed on the underlayer coating 11. As shown in FIG. 9, an underlayer coating 11 and a secondary coating 12 are formed on each of a pair of surfaces of the base steel sheet 10 (i.e., the front and reverse sides of the base steel sheet 10). The secondary coating 12 is a well-known insulating coating.

It is well known that a grain-oriented electrical steel sheet includes a base steel sheet, an underlayer coating, and a secondary coating.

[Features of Grain-Oriented Electrical Steel Sheet 1]

The grain-oriented electrical steel sheet 1 of the present embodiment satisfies Features 1 to 3.

(Feature 1)

The chemical composition of the base steel sheet 10 contains, in mass%, Si: 2.5 to 4.5%, Mn: 0.01 to 1.00%, N: 0 to 0.010%, C: 0 to 0.010%, sol. Al: 0 to 0.010%, one or more kinds of element selected from a group consisting of S and Se: 0 to 0.010% in total, Ti: more than 0 to 0.010%, Ni: 0 to 1.00%, Cr: 0 to 1.00%, Cu: 0 to 1.00%, P: 0 to 0.50%, Mo: 0 to 0.10%, Sn: 0 to 0.50%, Sb: 0 to 0.50%, and Bi: 0 to 0.0500%, the remainder being Fe and impurities.

(Feature 2)

When, by measuring crystal orientations at measurement points on a surface of the base steel sheet 10 that are located at a pitch of 2 mm in a first direction and in a second direction perpendicular to the first direction using an X-ray diffraction method, misorientations of grain boundaries of crystal grains are obtained, a total length of the grain boundaries of the crystal grains is defined as La, and a total length of grain boundaries with misorientations of 1 to 5° is defined as Ls, Formula (1) is satisfied.

$$\mathrm{Ls/La} \geq 0.140 \qquad (1)$$

(Feature 3)

The magnetic flux density $B_8$ is 1.910 T or more.

The following describes Features 1 to 3.

[(Feature 1) Regarding Chemical Composition]

The chemical composition of the base steel sheet 10 of the grain-oriented electrical steel sheet 1 contains the following elements:

Si: 2.5% to 4.5%

Silicon (Si) increases the electrical resistance (specific resistance) of the steel sheet and reduces the iron loss of the grain-oriented electrical steel sheet 1. If the Si content is less than 2.5%, the above-described effects cannot be sufficiently obtained. On the other hand, if the Si content exceeds 4.5%, the steel sheet will become brittle.

Therefore, the Si content is 2.5% to 4.5%.

The lower limit of the Si content is preferably 2.8%, more preferably 3.0%, and even more preferably 3.2%.

The upper limit of the Si content is preferably 4.2%, more preferably 4.0%, even more preferably 3.7%, even more preferably 3.6%, and even more preferably 3.5%.

Mn: 0.01% to 1.00%

Manganese (Mn) increases the specific resistance of the steel sheet and reduces the iron loss thereof. Mn further improves the hot workability of the steel sheet and suppresses occurrence of cracking during hot rolling. If the Mn content is less than 0.01%, the above-described effects cannot be sufficiently obtained. On the other hand, if the Mn content exceeds 1.00%, the magnetic flux density of the grain-oriented electrical steel sheet 1 will decrease and the iron loss thereof will also deteriorate.

Therefore, the Mn content is 0.01% to 1.00%.

The lower limit of the Mn content is preferably 0.02%, more preferably 0.03%, and even more preferably 0.05%.

The upper limit of the Mn content is preferably 0.70%, more preferably 0.50%, even more preferably 0.30%, and even more preferably 0.10%.

N: 0% to 0.010%

Nitrogen (N) deteriorates the iron loss of the grain-oriented electrical steel sheet 1 by forming nitrides. If the N content exceeds 0.010%, the iron loss of the grain-oriented electrical steel sheet 1 will deteriorate significantly.

Therefore, the N content is 0.010% or less. Note that the N content may be 0%. In other words, the N content is 0% to 0.010%.

The lower limit of the N content is preferably greater than 0%, more preferably 0.001%, and even more preferably 0.002%.

The upper limit of the N content is preferably 0.009%, more preferably 0.008%, and even more preferably 0.007%.

C: 0% to 0.010%

Carbon (C) is an essential element in steel slabs to improve the magnetic flux density. However, during the production process of the grain-oriented electrical steel sheet 1, C is released from the steel sheet. If the content of C remains more than 0.010% in the grain-oriented electrical steel sheet 1, which is a product, magnetic aging occurs and the iron loss of the grain-oriented electrical steel sheet 1 deteriorates.

Therefore, the C content is 0.010% or less. Note that the C content may be 0%. Therefore, the C content is 0% to 0.010%.

The lower limit of the C content is preferably greater than 0%, more preferably 0.001%, and even more preferably 0.002%.

The upper limit of the C content is preferably 0.009%, more preferably 0.008%, and even more preferably 0.007%.

Sol. Al: 0% to 0.010%

During the production process of the grain-oriented electrical steel sheet 1, acid-soluble aluminum (sol. Al) combines with N to form AlN and functions as an inhibitor. However, if the sol. Al content exceeds 0.010%, Al-based inclusions will remain in the steel sheet. In this case, the iron loss of the grain-oriented electrical steel sheet 1 deteriorates.

Therefore, the sol. Al content is 0.010% or less. Note that the sol. Al content may be 0%. In other words, the sol. Al content is 0% to 0.010%.

The lower limit of the sol. Al content is preferably greater than 0%, more preferably 0.001%, and even more preferably 0.002%.

The upper limit of the sol. Al content is preferably 0.009%, more preferably 0.008%, and even more preferably 0.007%.

Note that in the present specification, sol. Al means acid-soluble Al.

At least one type selected from the group consisting of S and Se: 0% to 0.010% in total

Sulfur (S) and selenium (Se) combine with Mn during the production process to form fine MnS or MnSe, which are inhibitors. Therefore, S and Se are essential elements in steel slabs. However, during the production process of the grain-oriented electrical steel sheet 1, S and Se are released from the steel sheet. If the total content of at least one type selected from the group consisting of S and Se in the grain-oriented electrical steel sheet 1 exceeds 0.010%, MnS or MnSe will remain in the steel sheet. In this case, the iron loss of the grain-oriented electrical steel sheet 1 deteriorates.

Accordingly, the total content of at least one type selected from the group consisting of S and Se is 0.010% or less. Note that the total content of at least one type selected from the group consisting of S and Se may be 0%. In other words, the total content of at least one type selected from the group consisting of S and Se is 0% to 0.010%.

The lower limit of the total content of at least one type selected from the group consisting of S and Se is preferably greater than 0%, more preferably 0.001%, and even more preferably 0.002%.

The upper limit of the total content of at least one type selected from the group consisting of S and Se is preferably 0.008%, more preferably 0.006%, and even more preferably 0.004%.

Ti: greater than 0% to 0.010%

Titanium (Ti) deteriorates the iron loss of the grain-oriented electrical steel sheet 1 by forming nitrides or carbides.

If the Ti content exceeds 0.010%, the iron loss of the grain-oriented electrical steel sheet 1 will deteriorate significantly.

Therefore, the Ti content is greater than 0% to 0.010%.

The lower limit of the Ti content is preferably 0.001%, and more preferably 0.002%.

The upper limit of the Ti content is preferably 0.009%, more preferably 0.008%, and even more preferably 0.007%.

The remainder of the chemical composition of the base steel sheet 10 of the grain-oriented electrical steel sheet 1 consists of Fe and impurities. Here, impurities mean those that are mixed in from ores as raw materials, scrap, the production environment, or the like while the base steel sheet 10 constituting the grain-oriented electrical steel sheet 1 is industrially manufactured, and that are permitted to the extent that they do not adversely affect the grain-oriented electrical steel sheet 1 of the present embodiment.

[Regarding Optional Elements]

The chemical composition of the base steel sheet 10 of the grain-oriented electrical steel sheet 1 may further contain, instead of a portion of Fe, one or more kinds of element selected from a group consisting of first and second groups.

[First Group]

One or more kinds of element selected from a group consisting of:

Ni: 0 to 1.00%,
Cr: 0 to 1.00%,
Cu: 0 to 1.00%,
P: 0 to 0.50%, and
Mo: 0 to 0.10%.

[Second Group]

One or more kinds of element selected from a group consisting of:

Sn: 0 to 0.50%,
Sb: 0 to 0.50%, and
Bi: 0 to 0.0500%.

The following describes First and Second Groups.

[First Group: Ni, Cr, Cu, P, and Mo]

Ni, Cr, Cu, P, and Mo are optional elements. These elements each change the composition formation behavior in the production process, and improve the magnetic properties of the grain-oriented electrical steel sheet 1.

Ni: 0% to 1.00%

Nickel (Ni) is an optional element and need not be contained. That is, the Ni content may be 0%.

If Ni is contained, that is, if the Ni content is greater than 0%, Ni changes the composition formation behavior until the finishing annealing process to promote secondary recrystallization in the Goss orientation. As a result, the magnetic properties of the grain-oriented electrical steel sheet 1 are improved. If even a small amount of Ni is contained, the above-described effects can be achieved to some extent.

However, if the Ni content exceeds 1.00%, secondary recrystallization may become unstable.

Therefore, the Ni content is 0% to 1.00%, and if contained, is 1.00% or less.

The lower limit of the Ni content is preferably 0.01%, more preferably 0.05%, and even more preferably 0.10%.

The upper limit of the Ni content is preferably 0.90%, more preferably 0.80%, and even more preferably 0.70%.

Cr: 0% to 1.00%

Chromium (Cr) is an optional element and need not be contained. That is, the Cr content may be 0%.

If Cr is contained, that is, if the Cr content is greater than 0%, Cr changes the composition formation behavior until the finishing annealing process to promote secondary recrystallization in the Goss orientation. As a result, the magnetic properties of the grain-oriented electrical steel sheet 1 are improved. If even a small amount of Cr is contained, the above-described effects can be achieved to some extent.

However, if the Cr content exceeds 1.00%, Cr oxides are formed in the steel sheet. Accordingly, the iron loss of the grain-oriented electrical steel sheet 1 deteriorates.

Therefore, the Cr content is 0% to 1.00%, and if contained, is 1.00% or less.

The lower limit of the Cr content is preferably 0.01%, more preferably 0.05%, and even more preferably 0.10%.

The upper limit of the Cr content is preferably 0.90%, more preferably 0.80%, and even more preferably 0.70%.

Cu: 0% to 1.00%

Copper (Cu) is an optional element and need not be contained. That is, the Cu content may be 0%.

If Cu is contained, that is, if the Cu content is greater than 0%, Cu changes the composition formation behavior until the finishing annealing process to promote secondary recrystallization in the Goss orientation. As a result, the magnetic properties of the grain-oriented electrical steel sheet 1 are improved. If even a small amount of Cu is contained, the above-described effects can be achieved to some extent.

However, if the Cu content exceeds 1.00%, the hot workability of the steel sheet is impaired.

Therefore, the Cu content is 0% to 1.00%, and if contained, is 1.00% or less.

The lower limit of the Cu content is preferably 0.01%, more preferably 0.03%, and even more preferably 0.05%.

The upper limit of the Cu content is preferably 0.40%, more preferably 0.30%, even more preferably 0.20%, and even more preferably 0.10%.

P: 0% to 0.50%

Phosphorus (P) is an optional element and need not be contained. That is, the P content may be 0%.

If P is contained, that is, if the P content is greater than 0%, P changes the composition formation behavior until the finishing annealing process to promote secondary recrystallization in the Goss orientation. As a result, the magnetic properties of the grain-oriented electrical steel sheet 1 are improved. If even a small amount of P is contained, the above-described effects can be achieved to some extent.

However, if the P content exceeds 0.50%, the workability of the steel sheet is impaired.

Therefore, the P content is 0% to 0.50%, and if contained, is 0.50% or less.

The lower limit of the P content is preferably 0.01%, more preferably 0.02%, and even more preferably 0.05%.

The upper limit of the P content is preferably 0.40%, more preferably 0.30%, and even more preferably 0.20%.

Mo: 0% to 0.10%

Molybdenum (Mo) is an optional element and need not be contained. That is, the Mo content may be 0%.

If Mo is contained, that is, if the Mo content is greater than 0%, Mo changes the composition formation behavior until the finishing annealing process to promote secondary recrystallization in the Goss orientation. As a result, the magnetic properties of the grain-oriented electrical steel sheet 1 are improved. If even a small amount of Mo is contained, the above-described effects can be achieved to some extent.

However, if the Mo content exceeds 0.10%, the workability of the steel sheet is impaired.

Therefore, the Mo content is 0% to 0.10%, and if contained, is 0.10% or less.

The lower limit of the Mo content is preferably 0.01%, more preferably 0.02%, and even more preferably 0.03%.

The upper limit of the Mo content is preferably 0.09%, more preferably 0.08%, and even more preferably 0.07%.

[Second Group: Sn, Sb, and Bi]

Sn, Sb, and Bi are optional elements. These elements each function as an inhibitor and stabilize secondary recrystallization.

Sn: 0% to 0.50%

Tin (Sn) is an optional element and need not be contained. That is, the Sn content may be 0%.

If Sn is contained, Sn functions as an inhibitor to stabilize secondary recrystallization in the production process of the grain-oriented electrical steel sheet 1. As a result, the magnetic properties of the grain-oriented electrical steel sheet 1 are improved. If even a small amount of Sn is contained, the above-described effects can be achieved to some extent.

However, if the Sn content exceeds 0.50%, the magnetic properties of the grain-oriented electrical steel sheet 1 will, on the contrary, be reduced.

Therefore, the Sn content is 0% to 0.50%, and if contained, is 0.50% or less.

The lower limit of the Sn content is preferably 0.01%, more preferably 0.05%, and even more preferably 0.10%.

The upper limit of the Sn content is preferably 0.45%, more preferably 0.40%, and even more preferably 0.35%.

Sb: 0% to 0.50%

Antimony (Sb) is an optional element and need not be contained. That is, the Sb content may be 0%.

If Sb is contained, Sb functions as an inhibitor to stabilize secondary recrystallization in the production process of the grain-oriented electrical steel sheet 1. As a result, the magnetic properties of the grain-oriented electrical steel sheet 1 are improved. If even a small amount of Sb is contained, the above-described effects can be achieved to some extent.

However, if the Sb content exceeds 0.50%, the magnetic properties of the grain-oriented electrical steel sheet 1 will, on the contrary, be reduced.

Therefore, the Sb content is 0% to 0.50%, and if contained, is 0.50% or less.

The lower limit of the Sb content is preferably 0.01%, more preferably 0.05%, and even more preferably 0.10%.

The upper limit of the Sb content is preferably 0.45%, more preferably 0.40%, and even more preferably 0.35%.

Bi: 0% to 0.0500%

Bismuth (Bi) is an optional element and need not be contained. That is, the Bi content may be 0%.

If Bi is contained, Bi functions as an inhibitor to stabilize secondary recrystallization in the production process of the grain-oriented electrical steel sheet 1. As a result, the magnetic properties of the grain-oriented electrical steel sheet 1 are improved. If even a small amount of Bi is contained, the above-described effects can be achieved to some extent. However, if the Bi content exceeds 0.0500%, the magnetic properties of the grain-oriented electrical steel sheet 1 will, on the contrary, be reduced.

Therefore, the Bi content is 0% to 0.0500%, and if contained, is 0.0500% or less.

The lower limit of the Bi content is preferably 0.0001%, more preferably 0.0005%, even more preferably 0.0010%, and even more preferably 0.0050%.

The upper limit of the Bi content is preferably 0.0400%, more preferably 0.0300%, even more preferably 0.0200%, and even more preferably 0.0100%.

[Method for Measuring Chemical Composition of Grain-Oriented Electrical Steel Sheet 1]

The chemical composition of the grain-oriented electrical steel sheet 1 of the present embodiment can be measured by a well-known component analysis method.

First, if the grain-oriented electrical steel sheet 1 includes the underlayer coating 11 and the secondary coating 12, the following method is used to remove the underlayer coating 11 and the secondary coating 12 from the base steel sheet 10. Specifically, by immersing the grain-oriented electrical steel sheet 1 including the secondary coating 12 in a high-temperature alkaline solution, the secondary coating 12 is removed. The composition of the alkali solution, the temperature thereof, and the immersion time may be adjusted as needed. For example, the grain-oriented electrical steel sheet 1 including the secondary coating 12 is immersed in a sodium hydroxide solution of NaOH in an amount of 30 to 50% by mass + $H_2O$ in an amount of 50 to 70% by mass at 80 to 90°C for 5 to 10 minutes, followed by rinsing and drying. With this process, the secondary coating 12 is removed from the grain-oriented electrical steel sheet 1.

Furthermore, by immersing the grain-oriented electrical steel sheet 1 from which the secondary coating 12 was removed and in which the underlayer coating 11 remains in high-temperature hydrochloric acid, the underlayer coating 11 is removed. The concentration of the hydrochloric acid, the temperature thereof, and the immersion time may be adjusted as needed. For example, the grain-oriented electrical steel sheet 1 from which the secondary coating 12 was removed and in which the underlayer coating 11 remains is immersed in hydrochloric acid in an amount of 30 to 40% by mass at 80 to 90°C for 1 to 5 minutes. After the immersion, the grain-oriented electrical steel sheet 1 is rinsed and dried. With this process, a grain-oriented electrical steel sheet 1 (base steel sheet 10) from which the secondary coating 12 and the underlayer coating 11 were removed is obtained.

The chemical composition of the obtained grain-oriented electrical steel sheet 1 (base steel sheet 10) is measured by a well-known component analysis method compliant with JIS G0321:2017. Specifically, chips are collected from the grain-oriented electrical steel sheet 1. The collected chips are dissolved in acid to obtain a solution. The solution is subjected to ICP-AES (Inductively Coupled Plasma Atomic Emission Spectrometry) to execute elemental analysis of the chemical composition. The C and S contents are determined by a well-known high-frequency combustion method (combustion-infrared absorption method). The N content is determined by a well-known inert gas melting-thermal conductivity method. For example, the chemical composition of the grain-oriented electrical steel sheet 1 can be analyzed by using a component analyzer (product name: ICPS-8000) manufactured by Shimadzu Corporation.

Note that each element content is specified as a numerical value to the least significant figure of each element content specified in the present embodiment and is obtained by rounding off a fraction of a measured numerical value based on the significant figures specified in the present embodiment. For example, the Si content of the present embodiment is specified as a numerical value to the first decimal place. Therefore, the Si content is specified as a numerical value to the first decimal place obtained by rounding off the second decimal place of the measured numerical value.

Similarly, each element content other than the Si content of the grain-oriented electrical steel sheet 1 of the present embodiment is specified as a value obtained by rounding off a fraction of a measured value to the least significant figure specified in the present embodiment.

Note that rounding off means rounding down if the digit to be rounded is less than 5 and rounding up if the digit to be rounded is 5 or more.

[Regarding Underlayer Coating 11]

As described above, the underlayer coating 11 may be a primary coating or an intermediate layer. The primary coating is a well-known coating composed mainly of forsterite ($Mg_2SiO_4$). More specifically, in the primary coating, the forsterite content is 60% by mass or more. The primary coating is formed as a result of the reaction between an annealing separator containing magnesia and an oxide film such as $SiO_2$ on the surface of the base steel sheet 10 or the elements contained in the base steel sheet 10 during the finishing annealing process. Therefore, the underlayer coating 11 has a composition derived from the chemical composition of the annealing separator and the base steel sheet 10. For example, the underlayer coating 11 contains spinel ($MgAl_2O_4$). When placing importance on the reduction of iron loss, the primary coating is used as the underlayer coating 11. On the other hand, the intermediate layer is a coating composed mainly of silica and alumina. When placing importance on punching workability, the intermediate layer is used as the underlayer coating 11.

[Regarding Secondary Coating 12]

The secondary coating 12 is formed on the underlayer coating 11. When a plurality of grain-oriented electrical steel sheets 1 stacked on top of each other are used, the secondary coating 12 ensures insulation between the grain-oriented electrical steel sheets 1 stacked on top of each other. In other words, the secondary coating 12 is an insulating coating. The secondary coating 12 has a well-known configuration. Specifically, the secondary coating 12 contains at least one type of inorganic materials such as a metal chromate salt, a phosphate compound, colloidal silica, a Zr compound, and a Ti compound. Preferably, the secondary coating 12 is a coating mainly composed of a phosphate compound. In other words, the secondary coating 12 contains a phosphate compound. When the secondary coating is mainly composed of a phosphate compound, the content of the phosphate compound is 50% by mass or more.

The secondary coating 12 may contain, together with a phosphate compound, at least one type selected from the group consisting of colloidal silica and polytetrafluoroethylene, for example. Examples of the phosphate compound include sodium phosphate, aluminum phosphate, and magnesium phosphate.

[(Feature 2) Regarding Formula (1)]

Furthermore, in the grain-oriented electrical steel sheet 1 of the present embodiment, when, by measuring crystal orientations at measurement points on a surface (rolled surface) of the grain-oriented electrical steel sheet 1 that are located at a pitch of 2 mm in a first direction and in a second direction perpendicular to the first direction using an X-ray diffraction method, misorientations of grain boundaries of crystal grains are obtained, the total length of the grain boundaries of the crystal grains is defined as La, and the total length of grain boundaries with misorientations of 1 to 5° is defined as Ls, Formula (1) is satisfied.

$$Ls/La \geq 0.140 \quad (1)$$

Here, the first direction and the second direction are not particularly limited as long as they are orthogonal to each other. The first direction is, for example, the rolling direction of the grain-oriented electrical steel sheet 1. When the first direction is the rolling direction of the grain-oriented electrical steel sheet 1, the second direction is the sheet width direction of the grain-oriented electrical steel sheet 1.

The small-angle grain boundary ratio $R_{SGB}$ is defined as follows.

$$R_{SGB} = Ls/La$$

The small-angle grain boundary ratio $R_{SGB}$ is the ratio of the total length Ls of small-angle grain boundaries with misorientation angles of 1 to 5° to the total length La of the grain boundaries of the crystal grains on the surface (rolled surface) of the grain-oriented electrical steel sheet 1. In other words, the small-angle grain boundary ratio $R_{SGB}$ refers to the ratio of small-angle grain boundaries to the total grain boundaries on the surface of the grain-oriented electrical steel sheet 1.

Here, a misorientation angle is defined as follows. On the surface (rolled surface) of the grain-oriented electrical steel sheet 1, attention is paid to the grain boundaries of crystal grains adjacent to each other. At the grain boundaries of the crystal grains adjacent to each other, the relative angular difference between the crystal orientation of one crystal grain and the crystal orientation of the other crystal grain is defined as a misorientation angle (°).

When the small-angle grain boundary ratio $R_{SGB}$ is large, the ratio of small-angle grain boundaries to the total grain boundaries is large. Therefore, for crystal grains adjacent to each other, the proportion of crystal grains with a large misorientation angle is smaller, and the proportion of crystal grains with a small misorientation angle is larger. As a result, local variations in magnetic flux density of the grain-oriented electrical steel sheet 1 are suppressed. That is to say, the magnetic flux density distribution is homogenized.

When the small-angle grain boundary ratio $R_{SGB}$ is 0.140 or more, the ratio of small-angle grain boundaries to the total grain boundaries is sufficiently large. In this case, the magnetic flux density distribution is sufficiently homogenized. If there is a region where the magnetic flux density is locally high, hysteresis loss occurs in this region. Such hysteresis loss is not eliminated even by performing magnetic domain refinement treatment. If the magnetic flux density distribution is sufficiently homogenized, the occurrence of hysteresis loss can be sufficiently suppressed. Therefore, it is possible to obtain excellent iron loss characteristics not only before but also after magnetic domain refinement treatment.

The lower limit of the small-angle grain boundary ratio $R_{SGB}$ is preferably 0.145, more preferably 0.148, and even more preferably 0.150.

The larger the small-angle grain boundary ratio $R_{SGB}$ is, the more preferable it is. Therefore, the preferred upper limit of the small-angle grain boundary ratio $R_{SGB}$ is ideally 1.000. The upper limit of the small-angle grain boundary ratio $R_{SGB}$ is furthermore preferably 0.800, even more preferably 0.600, even more preferably 0.400, and even more preferably 0.300.

[Method for Measuring Small-Angle Grain Boundary Ratio $R_{SGB}$]

The small-angle grain boundary ratio $R_{SGB}$ can be measured by the following method.

X-ray diffraction by the Laue method is performed on the rolled surface of the grain-oriented electrical steel sheet 1. Specifically, one or more rectangular observation regions $AR_n$ (n is a natural number) of 250 mm in the first direction of the grain-oriented electrical steel sheet 1 and 60 mm in the second direction are selected from arbitrary points on the rolled surface of the grain-oriented electrical steel sheet 1. X-ray diffraction using the Laue method is performed on the observation regions $AR_n$ at measurement points (3906 measurement points) located at intervals of 2 mm in the rolling direction and the width direction, and crystal orientations of the measurement points are obtained. The spot diameter at that time is set to 1 mm. Based on the crystal orientations obtained at the measurement points, boundaries with misorientation angles of 1 to 180° are defined as grain boundaries. Regions surrounded by the grain boundaries are then defined as crystal grains. The source for X-ray diffraction by the Laue method is a W target, the tube voltage is 40 kV, and the tube current is 40 mA.

Upon completion of measurement in each observation region $AR_n$, it is determined whether or not the total number of identified crystal grains is 100 or more. When the total number of crystal grains is 100 or more, the total length of grain boundaries of all crystal grains identified in all the observation regions $AR_n$ for which measurement has been completed is defined as La. Also, the total length of grain boundaries with misorientation angles of 1 to 5°, out of the grain boundaries of all the identified crystal grains, is defined as Ls.

For example, after the completion of the measurement of crystal orientations in the first observation region $AR_1$, if the number of identified crystal grains is 100 or more, La and Ls are obtained using all the crystal grains identified in the observation region $AR_1$.

On the other hand, after the completion of the measurement in the observation region $AR_1$, if the number of identified crystal grains is less than 100, measurement in the second observation region $AR_2$ is executed. After the completion of the measurement in the observation region $AR_2$, if the total number of identified crystal grains identified in the observation regions $AR_1$ and $AR_2$ is 100 or more, La and Ls are obtained using all the crystal grains identified in the observation regions $AR_1$ and $AR_2$.

In short, the measurement in the observation regions $AR_l$ to $AR_n$ is continued until the total number of identified crystal grains is 100 or more. When the total number of crystal grains reaches 100 or more, La and Ls are determined using all the crystal grains identified in all the observation regions $AR_l$ to $AR_n$ for which the measurement has been completed.

Using the obtained La and Ls, the small-angle grain boundary ratio $R_{SGB}$ is obtained by the following formula.

Small-angle grain boundary ratio $R_{SGB}$ = Ls/La

Based on the crystal orientation at the measurement points, La and Ls can be obtained by using the product named OIM Analysis manufactured by TSL Solutions Corporation as analysis software.

Note that it is difficult to identify crystal orientations at measurement points corresponding to crystal grains with a grain size of 1 mm or less, or grain boundaries thereof, and the identification may result in failure. Therefore, at such a measurement point (hereinafter referred to as a "defective measurement point"), crystal orientation data of the adjacent measurement point is used instead. Specifically, crystal orientation data of two measurement points (+X and -X) adjacent to a defective measurement point in the first direction and two measurement points (+Y and -Y) adjacent to the defective measurement point in the second direction are used in order of priority of +X, -X, +Y, -Y. First, the crystal orientation data of the +X measurement point is used as the crystal orientation data of the defective measurement point. If the crystal orientation data of the +X measurement point is also defective, the crystal orientation data of the -X measurement point is used. As described above, data that is usable instead of the defective data is determined in order of priority. Note that this method of substituting crystal orientation data is set as the "Clean up" function in the above-described OIM Analysis. The X direction is, e.g., the rolling direction, and the Y direction is, e.g., the width direction.

[(Feature 3) Regarding Magnetic Flux Density $B_8$]

Furthermore, in the grain-oriented electrical steel sheet 1 of the present embodiment, the magnetic flux density $B_8$ is 1.910 T or more. In other words, the grain-oriented electrical steel sheet 1 of the present embodiment can have excellent magnetic flux density. The lower limit of the magnetic flux density $B_8$ is preferably 1.911 T, and more preferably 1.912 T.

[Method for Measuring Magnetic Flux Density Bs]

The magnetic flux density $B_8$ of the grain-oriented electrical steel sheet 1 is measured by the following method. A test specimen including a central portion of the grain-oriented electrical steel sheet 1 in the sheet width direction is taken from the grain-oriented electrical steel sheet 1. The test specimen has a size of 100 mm × 500 mm × sheet thickness. A single sheet magnetic property test (SST test) is conducted in accordance with JIS C2556:2015. In the SST test, a magnetic field of 800 A/m is applied to the test specimen to obtain the magnetic flux density $B_8$ (T).

[Effects of Grain-Oriented Electrical Steel Sheet 1 of Present Embodiment]

The grain-oriented electrical steel sheet 1 of the present embodiment satisfies Features 1 to 3. Therefore, sufficient magnetic flux density can be obtained. Furthermore, excellent iron loss characteristics not only before but also after magnetic domain refinement treatment can be obtained.

[Other Aspects of Grain-Oriented Electrical Steel Sheet 1 of Present Embodiment]

The grain-oriented electrical steel sheet 1 of the present embodiment may further include a plurality of linear heat-affected zones that extend in a linear fashion and are aligned in a direction perpendicular to the extending direction, or a plurality of grooves that extend in a linear fashion and are aligned in a direction perpendicular to the extending direction.

The linear heat-affected zones or grooves are formed in the surface (rolled surface) of the grain-oriented electrical steel sheet 1 by well-known magnetic domain refinement treatment. The linear heat-affected zones or grooves segment the magnetic domains of the grain-oriented electrical steel sheet 1. In the grain-oriented electrical steel sheet 1 of the present embodiment, iron loss characteristics are significantly improved even after the magnetic domain refinement treatment.

[Method for Producing Grain-Oriented Electrical Steel Sheet 1 of Present Embodiment]

An example of a method for producing a grain-oriented electrical steel sheet of the present embodiment will be described. The method for producing a grain-oriented electrical steel sheet 1 that will be described below is an example for producing the grain-oriented electrical steel sheet 1 of the present embodiment. Accordingly, the grain-oriented electrical steel sheet 1 that has the above-described Features 1 to 3 may also be produced by a production method other than that described below. However, the production method that will be described below is a preferred example of the method for producing the grain-oriented electrical steel sheet 1 of the present embodiment.

[Production Process Flow]

An example of the method for producing the grain-oriented electrical steel sheet 1 of the present embodiment includes following Processes 1 to 6.

(Process 1) Hot rolling process
(Process 2) Hot-rolled sheet annealing process
(Process 3) Cold rolling process
(Process 4) Decarburization annealing process
(Process 5) Finishing annealing process
(Process 6) Secondary coating formation process

Note that the hot-rolled sheet annealing process (Process 2) is an optional process. Accordingly, the hot-rolled sheet annealing process may or may not be performed.

The cold rolling process (Process 3) further includes the following two processes.

(Process 31) Tandem rolling process
(Process 32) Reverse rolling process

In the production method of the present embodiment, the cold rolling process (Process 3) and the decarburization annealing process (Process 4) satisfy the following production conditions.

(Conditions of Tandem Rolling Process (Process 31))

Condition 1: Tandem rolling is performed before reverse rolling.
Condition 2: The average diameter D1 of work rolls is 200 mm or more.
Condition 3: A cumulative rolling reduction ratio CR1 is 30% or more.

(Conditions of Reverse Rolling Process (Process 32))

Condition 4: An intermediate steel sheet that has not been heat-treated after the tandem rolling process is subject to rolling.
Condition 5: Reverse rolling is performed using a multi-stage rolling mill.
Condition 6: The average diameter D2 of work rolls is 100 mm or less.
Condition 7: A cumulative rolling reduction ratio CR2 is 20% or more.
Condition 8: At least one pass of rolling is performed with a roll diameter difference of 2.0 mm or more between the upper and lower work rolls of a reverse rolling mill.

(Conditions of Decarburization Annealing Process (Process 4))

Condition 9: An average temperature increase rate HR in the temperature range of 400°C to 800°C is 400°C/sec or higher.
The following describes Processes 1 to 6.

[(Process 1) Hot Rolling Process]

In the hot rolling process, hot rolling is performed on a steel slab to produce a hot-rolled steel sheet. Here, the steel slab to be prepared has a chemical composition adjusted such that the chemical composition of the grain-oriented electrical steel sheet 1 satisfies Feature 1.

For example, the chemical composition of the steel slab contains, in mass%, Si: 2.5 to 4.5%, Mn: 0.01 to 0.30%, N: 0.003 to 0.015%, C: 0.010 to 0.100%, sol. Al: 0.010 to 0.050%, one or more kinds of element selected from a group consisting of S and Se: 0.010 to 0.050% in total, Ti: more than 0 to 0.010%, Ni: 0 to 0.50%, Cr: 0 to 0.50%, Cu: 0 to 0.50%, P: 0 to 0.05%, Mo: 0 to 0.05%, Sn: 0 to 0.30%, Sb: 0 to 0.30%, and Bi: 0 to 0.0200%, the remainder being Fe and impurities.

In the present production method, AlN is used as an inhibitor. Therefore, in the chemical composition of the steel slab, the Al content is in the above-described range. When an inhibitor-less method is adopted as the method for producing a grain-oriented electrical steel sheet, the Al content in the steel slab is 0.010% or less.

The steel slab is produced by a well-known steel making process, continuous casting process, or ingot making and billet rolling process. A steel slab with a thickness of 100 mm or less may be produced by a direct casting process.

The hot rolling process using the prepared steel slab includes the following processes.

(Process 11) Heating process
(Process 12) Rough rolling process
(Process 13) Finishing rolling process

The following describes Processes 11 to 13.

[(Process 11) Heating Process]

In the heating process, the steel slab is heated. For example, the steel slab is charged into a well-known heating furnace or a well-known holding furnace, and is heated. The heating temperature for the steel slab is preferably 1100 to 1450°C.

[(Process 12) Rough Rolling Process]

In the rough rolling process, rough rolling is performed on the heated steel slab to produce a rough bar. Here, rough rolling means hot rolling the steel slab using a well-known rough rolling mill. The rough bar means a steel sheet after the completion of the rough rolling process and before the start of the finishing rolling process. In the rough rolling process, the rough rolling mill is used to apply multiple passes of rolling reduction to the steel slab, thereby producing a rough bar.

[(Process 13) Finishing Rolling Process]

In the finishing rolling process, well-known finishing rolling is performed on the rough bar produced in the rough rolling process to produce a hot-rolled steel sheet. Here, finishing rolling means hot rolling the rough bar using a well-known finishing rolling mill. In the finishing rolling process, a continuous rolling mill constituted by multiple tandem-type finishing rolling stands lined up in a row on the pass line is used to apply multiple passes of rolling reduction to the rough bar, thereby producing a hot-rolled steel sheet.

[(Process 2) Hot-Rolled Sheet Annealing Process]

The hot-rolled sheet annealing process is an optional process. That is, the hot-rolled sheet annealing process may or may not be performed. If performed, in the hot-rolled sheet annealing process, annealing treatment is performed on the hot-rolled steel sheet produced in the hot rolling process. By performing the hot-rolled sheet annealing process, recrystallization is caused in the steel sheet structure, and the magnetic properties are enhanced.

In the hot-rolled sheet annealing process, it is sufficient to perform a well-known hot-rolled sheet annealing process. The method of heating the hot-rolled steel sheet in the hot-rolled sheet annealing is not particularly limited, and it is sufficient to employ a well-known heating method. The hot-rolled sheet annealing temperature is, for example, 800 to 1200°C. The holding time at the hot-rolled sheet annealing temperature is, for example, 10 to 300 seconds. Note that if the hot-rolled sheet annealing process is performed, pickling treatment may be performed on the hot-rolled steel sheet after the hot-rolled sheet annealing process and before the cold-rolling process.

[(Process 3) Cold Rolling Process]

In the cold rolling process, cold rolling is performed on the produced hot-rolled steel sheet to produce a cold-rolled steel sheet. As described above, the cold rolling process includes the following two processes.

(Process 31) Tandem rolling process
(Process 32) Reverse rolling process

In the cold rolling process, a tandem rolling process is first performed, and then a reverse rolling process is performed. The following describes the tandem rolling process and the reverse rolling process.

[(Process 31) Tandem Rolling Process]

In the tandem rolling process, cold rolling is performed using a tandem rolling mill.

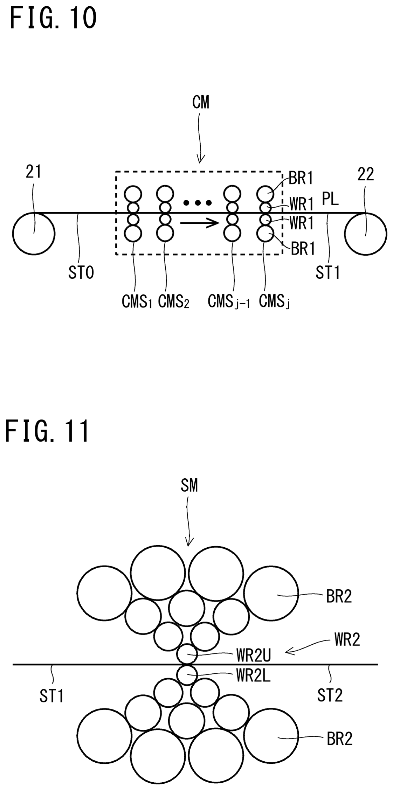

FIG. 10 is a schematic diagram of a tandem rolling mill. Referring to FIG. 10, a tandem rolling mill CM is located between a payoff reel (unwinding device) 21 and a tension reel (winding device) 22 from upstream to downstream.

The payoff reel 21 unwinds a wound hot-rolled steel sheet ST0. The tension reel 22 winds an intermediate steel sheet ST1 produced by the tandem rolling mill CM.

The tandem rolling mill CM performs continuous rolling of multiple passes on the unwound hot-rolled steel sheet ST to produce the intermediate steel sheet ST1.

The tandem rolling mill CM is provided with a plurality of rolling stands $CMS_1$ to $CMS_j$ (j is a natural number greater than or equal to 2) lined up in a row from upstream to downstream. Each rolling stand CMS includes a pair of work rolls WR1 extending horizontally. By coming into contact with the hot-rolled steel sheet to be cold rolled, the pair of work rolls WR1 cold roll the hot-rolled steel sheet. The rolling stand CMS may include a plurality of backup rolls BR1. The backup rolls BR1 support the work rolls WR1 to suppress the deflection of the work rolls WR1 during rolling.

In continuous rolling using the tandem rolling mill CM, subjecting a hot-rolled steel sheet to rolling reduction at each rolling stand CMS when the steel sheet passes through the rolling stand CMS is referred to as "one pass" of rolling reduction. Continuous rolling means multiple passes of rolling reduction using the tandem rolling mill CM. A hot-rolled steel sheet does not need to be subjected to rolling reduction at all the rolling stands CMS of the tandem rolling mill CM. For example, if six rolling stands $CMS_1$ to $CMS_6$ are arranged in the tandem rolling mill CM and a hot-rolled steel sheet is passed through the stand $CMS_6$ without being subjected to rolling reduction, five passes of continuous rolling will be performed.

[(Process 32) Reverse Rolling Process]

FIG. 11 is a schematic diagram of a multi-stage rolling mill that is used in a reverse rolling process. Referring to FIG. 11, in the reverse rolling process, a multi-stage rolling mill SM is used to perform multiple passes of reverse rolling on the intermediate steel sheet ST1 after the tandem rolling process to produce a cold-rolled steel sheet.

The multi-stage rolling mill SM is, for example, a Sendzimir rolling mill. The multi-stage rolling mill SM includes a pair of work rolls WR2 and a plurality of backup rolls BR2. In the multi-stage rolling mill SM, the plurality of backup rolls BR2 support the pair of work rolls WR2 to suppress the deflection of the work rolls WR2 as much as possible. With this, a high rolling reduction can be realized. The pair of work rolls WR2 includes an upper work roll WR2U and a lower work roll WR2L. The lower work roll WR2L is located below the upper work roll WR2U.

Here, subjecting the intermediate steel sheet ST1 to rolling reduction when the intermediate steel sheet ST1 passes through the multi-stage rolling mill SM is referred to as "one pass" of rolling reduction. In the case of reverse rolling, the intermediate steel sheet ST1 is subjected to rolling reduction when the intermediate steel sheet ST1 proceeds from upstream to downstream, and is also subjected to rolling reduction when the intermediate steel sheet ST1 proceeds from downstream to upstream. More specifically, when the intermediate steel sheet ST1 passes through the multi-stage rolling mill SM from upstream to downstream, one pass of rolling reduction is applied to the intermediate steel sheet ST1. Also, when the intermediate steel sheet ST1 passes through the same multi-stage rolling mill SM from downstream to upstream, one pass of rolling reduction is applied to the intermediate steel sheet ST1. In other words, when the intermediate steel sheet ST1 is subjected to rolling reduction in a reciprocating manner, two passes of rolling reduction are applied thereto. In some cases, when the intermediate steel sheet ST1 passes through the multi-stage rolling mill SM, no rolling reduction is applied to the intermediate steel sheet ST1.

In the cold rolling process, the above-described tandem rolling process and reverse rolling process are performed to produce a cold-rolled steel sheet.

[Production Conditions in Cold Rolling Process]

The cold rolling process satisfies Conditions 1 to 8.

(Conditions of Tandem Rolling Process)

Condition 1: Tandem rolling is performed before reverse rolling.

Condition 2: The average diameter D1 of work rolls is 200 mm or more.

Condition 3: The cumulative rolling reduction ratio CR1 is 30% or more.

(Conditions of Reverse Rolling Process)

Condition 4: An intermediate steel sheet that has not been heat-treated after the tandem rolling process is subject to rolling.

Condition 5: Multiple passes of reverse rolling are performed using the multi-stage rolling mill.

Condition 6: The average diameter D2 of work rolls is 100 mm or less.

Condition 7: The cumulative rolling reduction ratio CR2 is 20% or more.

Condition 8: At least one pass of rolling is performed with a roll diameter difference of 2 mm or more between the upper and lower work rolls of the reverse rolling mill.

The following describes Conditions 1 to 8.

[Conditions of Tandem Rolling Process]

[Regarding Condition 1]

In the tandem rolling process, before the reverse rolling process, the above-described tandem rolling mill CM is used to perform continuous rolling of multiple passes to produce the intermediate steel sheet ST1. As described above, in tandem rolling, work rolls with larger diameters can be used to perform rolling reduction, compared to reverse rolling. Therefore, in tandem rolling, the shear strain applied to the steel sheet can be suppressed compared to reverse rolling. As a result, the sizes of Goss-oriented crystal grains can be suppressed as much as possible in the later-described finishing annealing process.

[Regarding Condition 2]

In tandem rolling, the average diameter D1 of a plurality of work rolls used in each pass is 200 mm or more. In the multi-stage rolling mill (Sendzimir mill) used in the later-described reverse rolling process, the average diameter D2 of the work rolls is 100 mm or less in order to suppress deflection of the work rolls, and these work rolls are supported by the plurality of backup rolls. In multi-stage rolling mills, the combination of such a pair of work rolls and a plurality of backup rolls supporting the work rolls achieves high pressure. However, in rolling using a Sendzimir rolling mill, due to work rolls with a small diameter, the shear strain applied to a steel sheet to be rolled is large.

When the shear strain applied is large, $\alpha$-fiber orientations develop in the surface layer of the cold-rolled steel sheet. When the $\alpha$-fiber orientations develop, grain growth until immediately before the development of secondary recrystallization reduces the number of Goss-oriented grains that serve as the core of secondary recrystallization. Therefore, the secondary recrystallized grains become coarse. As a result, the magnetic properties (magnetic flux density and iron loss) of the grain-oriented electrical steel sheet 1 deteriorate.

In the present embodiment, the average diameter D1 of the work rolls in the tandem rolling process is 200 mm or more. In this case, the amount of shear strain applied to the surface layer of the steel sheet during cold rolling can be reduced. Therefore, in cold rolling, $\gamma$-fiber orientations are stabilized compared to the $\alpha$-fiber orientations. As a result, the $\alpha$-fiber orientations are suppressed and the $\gamma$-fiber orientations remain in the surface layer of the cold-rolled steel sheet. The $\gamma$-fiber orientations generate {111}<112> recrystallized grains at the development of primary recrystallization. In the finishing annealing process, {111}<112> recrystallized grains have an orientation relationship corresponding to $\Sigma 9$ with Goss-oriented grains, which has the effect of promoting secondary recrystallization of the Goss-oriented grains in the surface layer. Therefore, the degree of alignment with the Goss orientation after secondary recrystallization can be enhanced. As a result, the magnetic properties of the grain-oriented electrical steel sheet can be increased.

The average diameter D1 is the arithmetic mean value of the diameters (mm) of the pair of work rolls used in each pass.

The lower limit of the average diameter D1 is preferably 250 mm, more preferably 300 mm, even more preferably 325 mm, and even more preferably 350 mm.

The upper limit of the average diameter D1 is preferably 1000 mm, more preferably 900mm, even more preferably 800 mm, even more preferably 700 mm, and even more preferably 650 mm.

[Regarding Condition 3]

The cumulative rolling reduction ratio CR1 in the tandem rolling process is 30% or more. Here, the cumulative rolling reduction ratio CR1 (%) is defined as the following Formula (A).

CR1 = (sheet thickness of hot-rolled steel sheet before tandem rolling process - sheet thickness of intermediate steel sheet after tandem rolling process)/sheet thickness of hot-rolled steel sheet before tandem rolling process $\times$ 100    (A)

If the cumulative rolling reduction ratio CR1 is less than 30%, the rolling reduction in the tandem rolling process is insufficient. In this case, the amount of rolling reduction in the reverse rolling process will be high. Therefore, the amount of shear strain to be applied to the cold-rolled steel sheet will be excessively high. Therefore, the degree of alignment with the Goss orientation after secondary recrystallization is decreased. As a result, the magnetic properties of the grain-oriented electrical steel sheet are reduced. Accordingly, the cumulative rolling reduction ratio CR1 is set to 30% or more.

The lower limit of the cumulative rolling reduction ratio CR1 is preferably 35%, more preferably 40%, and even more preferably 45%.

The upper limit of the cumulative rolling reduction ratio CR1 is preferably 90%, more preferably 85%, even more preferably 80%, and even more preferably 75%.

[Conditions of Reverse Rolling Process]

[Regarding Condition 4]

The target to be rolled in the reverse rolling process is an intermediate steel sheet that has not been heat-treated after the tandem rolling process. In other words, in the reverse rolling process, an intermediate steel sheet, which is a tandem-rolled intermediate material, serves as the target to be rolled. Here, "heat treatment" means the treatment of heating and/or holding a steel sheet at a temperature of 500°C or higher for a predetermined period of time. Heat treatment is, for example, annealing.

When heat treatment such as annealing is performed on the intermediate steel sheet produced by the tandem rolling process, recovery and recrystallization will progress in the intermediate steel sheet. As a result, the total strain introduced by cold rolling decreases. As a result, the magnetic properties of the grain-oriented electrical steel sheet deteriorate. This is because, when heat treatment is performed on the intermediate steel sheet, the strain is reduced as described above, resulting in degradation of the assembly structure of the primary recrystallization in the central layer of the steel sheet. Specifically, the central layer of the steel sheet inherits the $\alpha$-fiber orientations formed in the hot rolling process. Even after the reverse rolling process, the $\alpha$-fiber orientations in the central layer of the steel sheet is significantly developed, compared to in the surface layer of the steel sheet.

If heat treatment such as annealing is performed on the intermediate steel sheet, the recrystallization of the $\alpha$-fiber orientations in the central layer of the steel sheet cannot be promoted even if reverse rolling is performed. When the recrystallization of the $\alpha$-fiber orientations in the central layer of the steel sheet is not sufficiently promoted, the {411}<148> recrystallization orientation in the central layer of the steel sheet decreases. The {411}<148> recrystallization orientation has an orientation relationship corresponding to $\Sigma9$ with the Goss orientation and promotes secondary recrystallization of the Goss orientation. Therefore, the target to be rolled in the reverse rolling process is an intermediate steel sheet that has not been heat-treated after the tandem rolling process.

[Regarding Condition 5]

In the reverse rolling process, multiple passes of reverse rolling are performed on the intermediate steel sheet ST1 that has not been heat-treated after the tandem rolling process, using the multi-stage rolling mill SM, to produce a cold-rolled steel sheet. In reverse rolling using a multi-stage rolling mill, a higher rolling reduction can be applied to the steel sheet, compared to in the tandem rolling. Therefore, the cold-rolled steel sheet can be made thinner.

[Regarding Condition 6]

In reverse rolling using the multi-stage rolling mill, the average diameter D2 of a plurality of work rolls used in each pass is 100 mm or less. If the average diameter D2 exceeds 100 mm, a sufficient rolling reduction cannot be applied to the intermediate steel sheet to be reverse rolled. In this case, sufficient shear strain cannot be applied to the intermediate steel plate.

If the average diameter D2 is 100 mm or less, sufficient shear strain can be applied to the intermediate steel sheet to be reverse rolled for each pass. As a result, a sufficient amount of shear zone, which serves as the primary recrystallization origin of Goss-oriented grains, can be formed. Therefore, a sufficient number of Goss-oriented grains are generated during the decarburization annealing process.

When the reverse rolling is performed using one multi-stage rolling mill SM, the average diameter D2 is the arithmetic mean value of the diameters (mm) of the pair of work rolls used in each pass. When the reverse rolling is performed using a plurality of multi-stage rolling mills SM, the average diameter D2 is the arithmetic mean value of the diameters (mm) of the pairs of work rolls used in each pass.

The upper limit of the average diameter D2 is preferably 95 mm, more preferably 90 mm, and even more preferably 85 mm.

The lower limit of the average diameter D2 is not particularly limited. The lower limit of the average diameter D2 is preferably 50 mm, more preferably 55 mm, and even more preferably 60 mm.

[Regarding Condition 7]

The cumulative rolling reduction ratio CR2 in the reverse rolling process is 20% or more. Here, the cumulative rolling reduction ratio CR2 (%) is defined as the following Formula (B).

CR2 = (sheet thickness of cold-rolled steel sheet of sheet thickness of intermediate steel sheet before reverse rolling process - sheet thickness of cold-rolled steel sheet after reverse rolling process)/sheet thickness of intermediate steel sheet before reverse rolling process $\times$ 100        (B)

If the cumulative rolling reduction ratio CR2 is less than 20%, the rolling reduction in the reverse rolling process is insufficient. In this case, the shear zone, which serves as the origin of primary recrystallization of Goss orientation, is insufficient, and no sufficient amount of Goss-oriented grain cores produced by primary recrystallization is generated in the subsequent decarburization annealing process. Therefore, the degree of alignment with the Goss orientation after secondary recrystallization is decreased. As a result, the magnetic properties of the grain-oriented electrical steel sheet are reduced. Therefore, the cumulative rolling reduction ratio CR2 is set to 20% or more.
The lower limit of the cumulative rolling reduction ratio CR2 is preferably 30%, more preferably 35%, and even more preferably 40%.
The upper limit of the cumulative rolling reduction ratio CR2 is preferably 90%, more preferably 80%, even more preferably 75%, and even more preferably 70%.

[Regarding Condition 8]

In the reverse rolling process, the roll diameter difference between the upper and lower work rolls of the multi-stage rolling mill is 2.0 mm or more in at least one pass. In other words, the largest value of the roll diameter differences between the upper and lower work rolls in the passes is 2.0 mm or more.
If the roll diameter difference is 2.0 mm or more, shear strain will be introduced into the central layer of the steel sheet during reverse rolling. With this, the shear strain is introduced into the $\alpha$-fiber orientations developing in the central layer of the steel sheet. Since the $\alpha$-fiber orientations has low strain, it is known as an orientation group that is difficult to recrystallize. However, as described above, sufficient shear strain is introduced into the $\alpha$-fiber orientations in the present embodiment. Therefore, recrystallization of the $\alpha$-fiber orientations is promoted. As a result, the {411}<148> recrystallization orientation increases in the central layer of the steel sheet. With this, secondary recrystallization of the Goss-oriented grains is promoted after secondary recrystallization. Furthermore, the misorientation angle between adjacent crystal grains can be reduced, and a sufficient small-angle grain boundary ratio $R_{SGB}$ can be obtained.
The upper limit of the roll diameter difference is not particularly limited. The upper limit of the roll diameter difference is, for example, 10.0 mm. The upper limit of the roll diameter difference is preferably 9.0 mm, and more preferably 8.0 mm.
In the cold rolling process, the tandem rolling process and the reverse rolling process are performed so as to satisfy the above-described Conditions 1 to 8 to produce a cold-rolled steel sheet with a controlled amount of shear strain in the surface layer of the steel sheet. By executing the subsequent process using this cold-rolled steel sheet, the produced grain-oriented electrical steel sheet 1 can satisfy Feature 2.

[(Process 4) Decarburization Annealing Process]

In the decarburization annealing process, decarburization annealing is performed on the cold-rolled steel sheet after the cold rolling process, thereby causing the development of primary recrystallization.
The decarburization annealing process includes the following processes.

    (Process 41) Temperature increasing process
    (Process 42) Decarburization process
    (Process 43) Cooling process

In the temperature increasing process (Process 41), the steel sheet is heated to a suitable temperature (achieving temperature) of 800 to 950°C. In the decarburization process (Process 42), decarburization annealing is performed while holding the steel sheet at the decarburization annealing temperature of 800 to 950°C, thereby causing the development of primary recrystallization. In the cooling process (Process 43), the steel sheet after the decarburization process is cooled by a well-known method. The achieving temperature and the decarburization annealing temperature may be the same temperature, or the achieving temperature may be higher than the decarburization annealing temperature.

In the present embodiment, the average temperature increase rate HR in the temperature range of 400°C to 800°C, which corresponds to the recrystallization temperature range of steel sheets, is significantly higher in the temperature increasing process. With this, recrystallization of the Goss orientation is promoted. Therefore, the degree of alignment with the Goss orientation after the secondary recrystallization can be increased. As a result, the magnetic properties of the grain-oriented electrical steel sheet can be increased.

The following describes the processes.

[(Process 41) Temperature Increasing Process]

In the temperature increasing process, the cold-rolled steel sheet after the cold rolling process is first charged into a heat treatment furnace. In the heat treatment furnace for decarburization annealing in the present embodiment, for example, the temperature of the cold-rolled steel sheet is increased to a suitable temperature between 800 and 950°C by high-frequency induction heating or current-flowing heating. The temperature increasing process satisfies the following Condition 9.

Condition 9: The average temperature increase rate HR in the temperature range of 400°C to 800°C is 400°C/sec or higher.

[Regarding Condition 9]

In the temperature increasing process, the average temperature increase rate in the temperature range of 400°C to 800°C for the temperature of the cold-rolled steel sheet is defined as the average temperature increase rate HR (°C/sec).

As described above, strain is accumulated in the cold-rolled steel sheet. If the average temperature increase rate HR is less than 400°C/sec, the strain energy, which is the driving force for recrystallization, will be released before recrystallization starts. In this case, a sufficient number of Goss-oriented grains cannot be generated in the cold-rolled steel sheet after primary recrystallization (i.e., cold-rolled steel sheet after the decarburization annealing process).

If the average temperature increase rate HR is 400°C/sec or higher, primary recrystallization will develop with sufficient strain energy accumulated in the cold-rolled steel sheet. Therefore, a sufficient number of Goss-oriented grains can be generated in the cold-rolled steel sheet after primary recrystallization. Accordingly, in the subsequent finishing annealing process, a large number of Goss-oriented grains remain when secondary recrystallization develops. Therefore, the degree of alignment with the Goss orientation after the secondary recrystallization can be increased. As a result, the magnetic properties of the grain-oriented electrical steel sheet can be increased, and variations in magnetic properties can be suppressed.

Note that the upper limit of the average temperature increase rate HR is not particularly limited. However, if the average temperature increase rate HR is higher than 3000°C/sec, the above effect is saturated. Therefore, the upper limit of the average temperature increase rate HR is 3000°C/sec.

The lower limit of the average temperature increase rate HR is preferably 450°C/sec, more preferably 500°C/sec, more preferably 550°C/sec, more preferably 600°C/sec, more preferably 700°C/sec, more preferably 800°C/sec, more preferably 900°C/sec, more preferably 1000°C/sec, and even more preferably 1100°C/sec.

The average temperature increase rate HR is measured by the following method. A plurality of thermometers are installed in the heat treatment furnace to measure the surface temperature of the steel sheet. The plurality of thermometers are aligned from upstream to downstream of the heat treatment furnace. The average temperature increase rate HR (°C/sec) is determined based on the temperatures of the steel sheet measured by the thermometers and the time taken for the temperature of the steel sheet to increase from 400°C to 800°C.

[(Process 42) Decarburization Process]

In the decarburization process, decarburization annealing is performed while holding the cold-rolled steel sheet after the temperature increasing process at the decarburization annealing temperature. This causes primary recrystallization to develop in the cold-rolled steel sheet. The atmosphere during the decarburization process need only be a well-known atmosphere, and is, for example, a wet nitrogen-hydrogen mixed atmosphere containing hydrogen and nitrogen. By executing decarburization annealing, the carbon in the steel sheet is removed from the steel sheet and primary recrystallization develops. The decarburization annealing temperature and the holding time at the decarburization annealing temperature are not particularly limited. The decarburization annealing temperature is, for example, 800 to 950°C. The holding time at the decarburization annealing temperature is, for example, 15 to 150 seconds.

[(Process 43) Cooling Process]

In the cooling process, the cold-rolled steel sheet after the decarburization process is cooled to room temperature using a well-known method to obtain a decarburized annealed steel sheet. The cooling method may be leaving the steel sheet to cool to room temperature or cooling by water. Preferably, the cold-rolled steel sheet after the decarburization process is left to be cooled. With the above-described processes, a decarburized annealed steel sheet is produced in the decarburization annealing process.

[(Process 5) Finishing Annealing Process]

In the finishing annealing process, an annealing separator is applied to the decarburized annealed steel sheet, and finishing annealing is performed on the decarburized annealed steel sheet to which the annealing separator was applied, thereby producing a finished annealed steel sheet.
The finishing annealing process includes the following processes.

(Process 51) Annealing separator application process
(Process 52) Annealing process

The following describes the processes.

[(Process 51) Annealing Separator Application Process]

In the annealing separator application process, an annealing separator is applied to the decarburized annealed steel sheet. Specifically, a water-based slurry containing the annealing separator is applied to the decarburized annealed steel sheet. The water-based slurry is prepared by adding water to the annealing separator and stirring the resultant product.
The annealing separator may be composed mainly of magnesium oxide (MgO), or mainly of silica and alumina. The term "being composed mainly of" means that the corresponding component is 60.0% by mass or more in the annealing separator. The annealing separator may contain, in addition to MgO or silica and alumina, well-known additives.
When placing importance on the reduction of iron loss, the annealing separator composed mainly of MgO is used. When placing importance on punching workability, the annealing separator composed mainly of silica and alumina is used.
In the annealing separator application process, the water-based slurry, which is the annealing separator, is applied to a surface of the decarburized annealed steel sheet. The steel sheet coated with the annealing separator on its surface is wound and coiled. After the steel sheet is coiled, the annealing process is performed.

[(Process 52) Annealing Process]

The annealing process is performed on the steel sheet after the annealing separator application process, thereby causing the development of primary recrystallization. The finishing annealing process is performed by charging the coiled steel sheet into a heat treatment furnace. The production conditions in the annealing process are, for example, as follows. Note that the atmosphere inside the furnace in the annealing process is a well-known atmosphere.

Finishing annealing temperature: 800 to 1200°C

Holding time at the finishing annealing temperature: 5 to 60 hours.
If the finishing annealing temperature is less than 800°C, sufficient secondary recrystallization will not develop and purification to remove precipitates used for secondary recrystallization will not be sufficient. Therefore, the magnetic properties of the produced grain-oriented electrical steel sheet are reduced. On the other hand, even if the finishing annealing temperature exceeds 1200°C, the effects on the secondary recrystallization and purification will be low, and problems such as deformation of the steel sheet will occur. If the finishing annealing temperature is 800 to 1200°C, sufficient secondary recrystallization will develop and magnetic properties will be enhanced on the assumption that the above-described holding time is appropriate. Furthermore, an underlayer coating is formed on the surface of the steel sheet.
With the above-described production processes, the finished annealed steel sheet is produced in the finishing annealing process.
Note that elements of the chemical composition of the steel sheet are removed from the steel sheet to some extent by the finishing annealing process. In particular, S, Se, Al, N, etc., which function as inhibitors, are significantly removed. In addition, the underlayer coating (primary coating or intermediate layer) is formed on the surface of the grain-oriented electrical steel sheet after the finishing annealing process.

[(Process 6) Secondary Coating Formation Process]

In the secondary coating formation process, a secondary coating (insulating coating) forming agent is applied to the finished annealed steel sheet. Furthermore, heat treatment is performed on the finished annealed steel sheet to which the secondary coating forming agent has been applied. With this, a secondary coating (insulating coating) is formed on the finished annealed steel sheet.

Specifically, a well-known secondary coating forming agent that contains at least one type of inorganic materials such as a metal chromate salt, a metal phosphate salt, colloidal silica, a Zr compound, and a Ti compound is applied to the surface (underlayer coating) of the finished annealed steel sheet. Then, the finished annealed steel sheet to which the secondary coating forming agent was applied is baked. With this, a well-known secondary coating is formed on the underlayer coating.

[Other Optional Processes]

[Nitriding Treatment Process]

In the method for producing the grain-oriented electrical steel sheet 1 according to the present embodiment, a nitriding treatment process may be performed, if necessary, after the decarburization annealing process (Process 4) and before the finishing annealing process (Process 5). The nitriding treatment process may be performed under well-known conditions. The nitriding treatment temperature is, for example, 700 to 850°C. The atmosphere (nitriding treatment atmosphere) in a nitriding treatment furnace is, for example, an atmosphere containing nitriding gases such as hydrogen, nitrogen, and ammonia.

If the nitriding treatment temperature is 700°C or higher, or the nitriding treatment temperature is 850°C or lower, nitrogen can easily penetrate into the steel sheet during the nitriding treatment. If the nitriding treatment is performed within this temperature range, the amount of nitrogen inside the steel sheet can be favorably secured. Therefore, fine AlN is favorably formed in the steel sheet before secondary recrystallization. As a result, secondary recrystallization favorably develops during the finishing annealing process. Note that the time for holding the steel sheet at the nitriding treatment temperature is not particularly limited, but is 10 to 60 seconds, for example.

[Magnetic Domain Refinement Treatment Process]

On the grain-oriented electrical steel sheet according to the present embodiment, a magnetic domain refinement treatment process may further be performed, if necessary, after the finishing annealing process (Process 5) or the secondary coating formation process (Process 6). In the magnetic domain refinement treatment process, the surface (rolled surface) of the grain-oriented electrical steel sheet is irradiated with laser beams that have a magnetic domain refinement effect to form linear heat-affected zones on the surface of the steel sheet, or to physically form grooves in the surface of the steel sheet. In this case, it is possible to produce a grain-oriented electrical steel sheet with even better magnetic properties.

With the above-described production processes, the grain-oriented electrical steel sheet 1 of the present embodiment is produced.

Hereinafter, aspects of the grain-oriented electrical steel sheet of the present embodiment will be more specifically described with reference to examples. These examples are examples for the purpose of confirming the effects of the method for producing the grain-oriented electrical steel sheet of the present embodiment, and are not intended to limit the grain-oriented electrical steel sheet of the present disclosure.

[EXAMPLE 1]

In Example 1, Conditions 1 to 9 of the above-described production processes were changed, and grain-oriented electrical steel sheets were produced.

Specifically, steel slabs were prepared. The chemical composition of the steel slabs contained, in mass%: Si: 3.3%, Mn: 0.08%, N: 0.008%, C: 0.075%, sol. Al: 0.025%, one or more kinds of element selected from a group consisting of S and Se: 0.022% in total, Ti: 0.001%, Ni: 0.03%, Cr: 0.04%, Cu: 0.05%, P: 0.01%, Mo: 0.00%, Sn: 0.10%, Sb: 0.00%, and Bi: 0.0000%, the remainder being Fe and impurities.

A hot rolling process was performed on the prepared steel slabs. Specifically, the steel slab of each test number was heated to 1340°C in a heating furnace. Hot rolling was performed on the heated steel slab to produce a hot-rolled steel sheet with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm. Specifically, a first cold rolling process as shown in Table 1 was performed, and then a second cold rolling process was performed. Conditions 1 to 8 were as shown in Table 1.

[Table 1]

TABLE 1

| Test number | Cold rolling process | | | | | | | | Decarburization annealing process |
|---|---|---|---|---|---|---|---|---|---|
| | First cold rolling process | | | Second cold rolling process | | | | | |
| | Condition 1 | Condition 2 | Condition 3 | Condition 4 | Condition 5 | Condition 6 | Condition 7 | Condition 8 | Condition 9 |
| | Rolling method | Average diameter D1 (mm) | Rolling reduction ratio CR1 (%) | Heat treatment | Rolling method | Average diameter D2 (mm) | Rolling reduction ratio CR2 (%) | Roll diameter difference (mm) | Temperature increase rate HR (°C/sec) |
| 1 | Tandem | 200 | 32 | No | Reverse | 100 | 86 | Yes | 400 |
| 2 | Tandem | 200 | 60 | No | Reverse | 80 | 76 | Yes | 400 |
| 3 | Tandem | 200 | 80 | No | Reverse | 90 | 52 | Yes | 400 |
| 4 | Tandem | 200 | 35 | No | Reverse | 70 | 85 | Yes | 400 |
| 5 | Tandem | 200 | 60 | No | Reverse | 60 | 76 | Yes | 400 |
| 6 | Tandem | 200 | 85 | No | Reverse | 70 | 36 | Yes | 400 |
| 7 | Tandem | 200 | 35 | No | Reverse | 80 | 85 | Yes | 400 |
| 8 | Tandem | 200 | 65 | No | Reverse | 80 | 73 | Yes | 400 |
| 9 | Tandem | 200 | 85 | No | Reverse | 90 | 36 | Yes | 400 |
| 10 | Tandem | 400 | 41 | No | Reverse | 100 | 84 | Yes | 400 |
| 11 | Tandem | 400 | 60 | No | Reverse | 100 | 76 | Yes | 400 |
| 12 | Tandem | 400 | 80 | No | Reverse | 90 | 52 | Yes | 400 |
| 13 | Tandem | 400 | 34 | No | Reverse | 90 | 86 | Yes | 400 |
| 14 | Tandem | 400 | 59 | No | Reverse | 80 | 77 | Yes | 400 |
| 15 | Tandem | 400 | 88 | No | Reverse | 70 | 20 | Yes | 400 |
| 16 | Tandem | 400 | 37 | No | Reverse | 60 | 85 | Yes | 400 |
| 17 | Tandem | 400 | 61 | No | Reverse | 80 | 75 | Yes | 400 |
| 18 | Tandem | 400 | 88 | No | Reverse | 90 | 20 | Yes | 400 |
| 19 | Tandem | 600 | 31 | No | Reverse | 100 | 86 | Yes | 400 |
| 20 | Tandem | 600 | 54 | No | Reverse | 100 | 79 | Yes | 400 |
| 21 | Tandem | 600 | 78 | No | Reverse | 100 | 57 | Yes | 400 |
| 22 | Tandem | 600 | 33 | No | Reverse | 80 | 86 | Yes | 400 |

| Test number | Cold rolling process | | | | | | | | Decarburization annealing process |
| | First cold rolling process | | | Second cold rolling process | | | | | |
| | Condition 1 | Condition 2 | Condition 3 | Condition 4 | Condition 5 | Condition 6 | Condition 7 | Condition 8 | Condition 9 |
| | Rolling method | Average diameter D1 (mm) | Rolling reduction ratio CR1 (%) | Heat treatment | Rolling method | Average diameter D2 (mm) | Rolling reduction ratio CR2 (%) | Roll diameter difference (mm) | Temperature increase rate HR (°C/sec) |
|---|---|---|---|---|---|---|---|---|---|
| 23 | Tandem | 600 | 55 | No | Reverse | 80 | 79 | Yes | 400 |
| 24 | Tandem | 600 | 87 | No | Reverse | 60 | 26 | Yes | 400 |
| 25 | Tandem | 600 | 32 | No | Reverse | 80 | 86 | Yes | 400 |
| 26 | Tandem | 600 | 49 | No | Reverse | 70 | 81 | Yes | 400 |
| 27 | Tandem | 600 | 78 | No | Reverse | 70 | 57 | Yes | 400 |
| 28 | Tandem | 400 | 61 | No | Reverse | 70 | 75 | Yes | 800 |
| 29 | Tandem | 400 | 65 | No | Reverse | 80 | 73 | Yes | 1300 |
| 30 | Tandem | 400 | 62 | No | Reverse | 70 | 75 | Yes | 1800 |
| 31 | Tandem | 400 | 62 | No | Reverse | 80 | 75 | Yes | 2800 |
| 32 | Tandem | 200 | 35 | No | Reverse | 70 | 85 | No | 400 |
| 33 | Tandem | 200 | 43 | No | Reverse | 70 | 83 | No | 400 |
| 34 | Tandem | 200 | 64 | No | Reverse | 80 | 73 | No | 400 |
| 35 | Tandem | 200 | 60 | No | Reverse | 80 | 76 | No | 1300 |
| 36 | Tandem | 200 | 63 | No | Reverse | 80 | 74 | No | 1800 |
| 37 | Tandem | 400 | 33 | No | Reverse | 80 | 86 | No | 400 |
| 38 | Tandem | 400 | 39 | No | Reverse | 80 | 84 | No | 400 |
| 39 | Tandem | 400 | 58 | No | Reverse | 80 | 77 | No | 400 |
| 40 | Tandem | 400 | 64 | No | Reverse | 80 | 73 | No | 1300 |
| 41 | Tandem | 400 | 63 | No | Reverse | 80 | 74 | No | 1800 |
| 42 | Tandem | 600 | 32 | No | Reverse | 70 | 86 | No | 400 |
| 43 | Tandem | 600 | 48 | No | Reverse | 70 | 82 | No | 400 |
| 44 | Tandem | 600 | 65 | No | Reverse | 70 | 73 | No | 400 |

(continued)

| Test number | Cold rolling process | | | | | | | | Decarburization annealing process |
| | First cold rolling process | | | | Second cold rolling process | | | | |
| | Condition 1 | Condition 2 | Condition 3 | Condition 4 | Condition 5 | Condition 6 | Condition 7 | Condition 8 | Condition 9 |
| | Rolling method | Average diameter D1 (mm) | Rolling reduction ratio CR1 (%) | Heat treatment | Rolling method | Average diameter D2 (mm) | Rolling reduction ratio CR2 (%) | Roll diameter difference (mm) | Temperature increase rate HR (°C/sec) |
|---|---|---|---|---|---|---|---|---|---|
| 45 | Tandem | 600 | 71 | No | Reverse | 70 | 67 | No | 1300 |
| 46 | Tandem | 600 | 68 | No | Reverse | 70 | 70 | No | 1800 |
| 47 | Tandem | 150 | 76 | No | Reverse | 70 | 60 | Yes | 400 |
| 48 | Tandem | 400 | 22 | No | Reverse | 80 | 88 | Yes | 400 |
| 49 | Tandem | 400 | 66 | No | Reverse | 130 | 72 | Yes | 400 |
| 50 | Tandem | 400 | 89 | No | Reverse | 90 | 13 | Yes | 400 |
| 51 | Tandem | 400 | 65 | Yes | Reverse | 80 | 73 | Yes | 400 |
| 52 | Reverse | 400 | 90 | - | - | - | - | - | 400 |
| 53 | Tandem | 400 | 55 | No | Reverse | 80 | 79 | Yes | 20 |
| 54 | Tandem | 400 | 65 | No | Reverse | 80 | 73 | Yes | 100 |
| 55 | Tandem | 400 | 62 | No | Reverse | 80 | 75 | Yes | 200 |
| 56 | Tandem | 400 | 48 | No | Reverse | 80 | 82 | Yes | 300 |

Specifically, "Tandem" in the column "Condition 1, Rolling method" of the column "First cold rolling process" in Table 1 means that a tandem rolling process was performed as the first cold rolling process. "Reverse" means that a reverse rolling process was performed as the first cold rolling process.

In the column "Condition 2, Average diameter D1 (mm)" of the column "First cold rolling process" in Table 1, the average diameters D 1 (mm) of the work rolls used in each pass are listed. In the column "Condition 3, Rolling reduction ratio CR1 (%)" of the column "First cold rolling process" in Table 1, the cumulative rolling reduction ratios CR1 (%) in the first cold rolling process are listed.

The column "Condition 4, Heat treatment" in the column "Second cold rolling process" in Table 1 indicates whether or not the cold-rolled steel sheet to be rolled has been heat treated. "No" means that the cold-rolled steel sheet that was a rolled intermediate material and had not been annealed was subjected to the second cold rolling process. "Yes" means that the annealed cold-rolled steel sheet was subjected to the second cold rolling process. Note that in the annealing process, the cold-rolled steel sheet was held at 1100°C for 80 seconds.

"Reverse" in the column "Condition 5, Rolling method" of the column "Second cold rolling process" in Table 1 means that a reverse rolling process was performed as the second cold rolling process. "Tandem" means that a tandem rolling process was performed as the second cold rolling process. "-" means that no second cold rolling process was performed.

In the column "Condition 6, Average diameter D2 (mm)" of the column "Second cold rolling process" in Table 1, the average diameters D2 (mm) of the work rolls used in each pass are listed. In the column "Condition 7, Rolling reduction ratio CR2 (%)" of the column "Second cold rolling process" in Table 1, the cumulative rolling reduction ratios CR2 (%) in the second cold rolling process are listed.

In the column "Condition 8, Roll diameter difference (mm)" in Table 1, "Yes" means that the roll diameter difference between the upper and lower work rolls was 2.0 mm or more in at least one pass. "No" means that the roll diameter difference was less than 2.0 mm in all the passes.

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rates HR when the temperature is increased from 400°C to 800°C were as described in the column "Condition 9, Temperature increase rate HR (°C/sec)" of "Decarburization annealing process" in Table 1.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the primary coatings. With the above-described production processes, the grain-oriented electrical steel sheets of the test numbers were produced.

The chemical compositions of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers were chemical compositions containing, Si: 3.3%, Mn: 0.08%, N: less than 0.002%, C: 0.002%, sol. Al: less than 0.001%, S: less than 0.001%, and Ti: 0.002%, the remainder consisting of Fe and impurities.

[Evaluation Test]

The following evaluation tests were conducted on the produced grain-oriented electrical steel sheets.

    (Test 1) Small-angle grain boundary ratio $R_{SGB}$ measurement test
    (Test 2) Magnetic flux density measurement test
    (Test 3) Iron loss evaluation test for grain-oriented electrical steel sheet before magnetic domain refinement treatment
    (Test 4) Iron loss evaluation test for grain-oriented electrical steel sheet after magnetic domain refinement treatment

The following describes Tests 1 to 4.

[(Test 1) Small-Angle Grain Boundary Ratio $R_{SGB}$ Measurement Test]

La and Ls were obtained for the grain-oriented electrical steel sheet of each test number by the method described above in [Method for Measuring Small-Angle Grain Boundary Ratio $R_{SGB}$]. The obtained La, Ls, and small-angle grain boundary ratio $R_{SGB}$ are respectively shown in the columns "Ls (mm)", "La (mm)", and "$R_{SGB}$" in Table 2.

[Table 2]

TABLE 2

| Test number | Ls (mm) | La (mm) | $R_{SGB}$ | Magnetic flux density $B_8$ (T) | Evaluation result | | | | | | | Remarks |
| | | | | | Before magnetic domain refinement treatment | | | After magnetic domain refinement treatment | | | |
| | | | | | Iron loss $W_{17/50}$ (W/kg) | WO | $W_{17/50} \leq W0$ | Iron loss $W_{17/50}$ (W/kg) | W1 | $W_{17/50} \leq W1$ | |
|---|---|---|---|---|---|---|---|---|---|---|---|
| 1 | 720 | 4890 | 0.147 | 1.912 | 0.842 | 0.865 | YES | 0.744 | 0.758 | YES | Inventive example |
| 2 | 760 | 5220 | 0.146 | 1.914 | 0.848 | 0.858 | YES | 0.743 | 0.751 | YES | Inventive example |
| 3 | 680 | 4420 | 0.154 | 1.919 | 0.830 | 0.840 | YES | 0.726 | 0.734 | YES | Inventive example |
| 4 | 760 | 5160 | 0.147 | 1.911 | 0.842 | 0.869 | YES | 0.740 | 0.762 | YES | Inventive example |
| 5 | 690 | 4810 | 0.143 | 1.914 | 0.832 | 0.858 | YES | 0.729 | 0.751 | YES | Inventive example |
| 6 | 690 | 4650 | 0.148 | 1.916 | 0.837 | 0.851 | YES | 0.733 | 0.744 | YES | Inventive example |
| 7 | 670 | 4600 | 0.146 | 1.914 | 0.842 | 0.858 | YES | 0.743 | 0.751 | YES | Inventive example |
| 8 | 690 | 4500 | 0.153 | 1.913 | 0.835 | 0.862 | YES | 0.738 | 0.755 | YES | Inventive example |
| 9 | 680 | 4650 | 0.146 | 1.914 | 0.841 | 0.858 | YES | 0.745 | 0.751 | YES | Inventive example |
| 10 | 770 | 4890 | 0.157 | 1.913 | 0.826 | 0.862 | YES | 0.719 | 0.755 | YES | Inventive example |
| 11 | 720 | 4410 | 0.163 | 1.918 | 0.825 | 0.844 | YES | 0.720 | 0.737 | YES | Inventive example |
| 12 | 740 | 4560 | 0.162 | 1.923 | 0.821 | 0.826 | YES | 0.717 | 0.720 | YES | Inventive example |
| 13 | 780 | 5130 | 0.152 | 1.911 | 0.849 | 0.869 | YES | 0.753 | 0.762 | YES | Inventive example |
| 14 | 760 | 4670 | 0.163 | 1.921 | 0.823 | 0.833 | YES | 0.719 | 0.727 | YES | Inventive example |
| 15 | 770 | 4910 | 0.157 | 1.914 | 0.823 | 0.858 | YES | 0.719 | 0.751 | YES | Inventive example |
| 16 | 680 | 4580 | 0.148 | 1.915 | 0.841 | 0.855 | YES | 0.742 | 0.748 | YES | Inventive example |
| 17 | 780 | 4810 | 0.162 | 1.916 | 0.814 | 0.851 | YES | 0.713 | 0.744 | YES | Inventive example |
| 18 | 730 | 4630 | 0.158 | 1.913 | 0.825 | 0.862 | YES | 0.720 | 0.755 | YES | Inventive example |
| 19 | 720 | 4730 | 0.152 | 1.912 | 0.848 | 0.865 | YES | 0.743 | 0.758 | YES | Inventive example |
| 20 | 720 | 4580 | 0.157 | 1.917 | 0.821 | 0.847 | YES | 0.717 | 0.741 | YES | Inventive example |
| 21 | 720 | 4450 | 0.162 | 1.913 | 0.824 | 0.862 | YES | 0.722 | 0.755 | YES | Inventive example |

(continued)

| Test number | Ls (mm) | La (mm) | $R_{SGB}$ | Magnetic flux density $B_8$ (T) | Evaluation result | | | | | | Remarks |
|---|---|---|---|---|---|---|---|---|---|---|---|
| | | | | | Before magnetic domain refinement treatment | | | After magnetic domain refinement treatment | | | |
| | | | | | Iron loss $W_{17/50}$ (W/kg) | W0 | $W_{17/50} \leq W0$ | Iron loss $W_{17/50}$ (W/kg) | W1 | $W_{17/50} \leq W1$ | |
| 22 | 680 | 4460 | 0.152 | 1.914 | 0.842 | 0.858 | YES | 0.742 | 0.751 | YES | Inventive example |
| 23 | 690 | 4420 | 0.156 | 1.921 | 0.814 | 0.833 | YES | 0.704 | 0.727 | YES | Inventive example |
| 24 | 720 | 4520 | 0.159 | 1.920 | 0.816 | 0.837 | YES | 0.715 | 0.730 | YES | Inventive example |
| 25 | 680 | 4510 | 0.151 | 1.915 | 0.848 | 0.855 | YES | 0.741 | 0.748 | YES | Inventive example |
| 26 | 740 | 4530 | 0.163 | 1.922 | 0.811 | 0.830 | YES | 0.710 | 0.723 | YES | Inventive example |
| 27 | 720 | 4580 | 0.157 | 1.921 | 0.812 | 0.833 | YES | 0.709 | 0.727 | YES | Inventive example |
| 28 | 860 | 5320 | 0.162 | 1.922 | 0.799 | 0.830 | YES | 0.708 | 0.723 | YES | Inventive example |
| 29 | 870 | 5540 | 0.157 | 1.923 | 0.791 | 0.826 | YES | 0.704 | 0.720 | YES | Inventive example |
| 30 | 920 | 5880 | 0.156 | 1.923 | 0.784 | 0.826 | YES | 0.702 | 0.720 | YES | Inventive example |
| 31 | 970 | 6230 | 0.156 | 1.924 | 0.778 | 0.822 | YES | 0.701 | 0.716 | YES | Inventive example |
| 32 | 660 | 4860 | 0.136 | 1.911 | 0.894 | 0.869 | NO | 0.778 | 0.762 | NO | Comparative example |
| 33 | 600 | 4450 | 0.135 | 1.921 | 0.851 | 0.833 | NO | 0.742 | 0.727 | NO | Comparative example |
| 34 | 550 | 4620 | 0.119 | 1.917 | 0.864 | 0.847 | NO | 0.758 | 0.741 | NO | Comparative example |
| 35 | 740 | 5490 | 0.135 | 1.922 | 0.864 | 0.830 | NO | 0.745 | 0.723 | NO | Comparative example |
| 36 | 680 | 5520 | 0.123 | 1.915 | 0.868 | 0.855 | NO | 0.761 | 0.748 | NO | Comparative example |
| 37 | 650 | 4820 | 0.135 | 1.914 | 0.881 | 0.858 | NO | 0.768 | 0.751 | NO | Comparative example |
| 38 | 620 | 4530 | 0.137 | 1.918 | 0.870 | 0.844 | NO | 0.764 | 0.737 | NO | Comparative example |
| 39 | 610 | 4490 | 0.136 | 1.922 | 0.860 | 0.830 | NO | 0.739 | 0.723 | NO | Comparative example |
| 40 | 730 | 5490 | 0.133 | 1.923 | 0.859 | 0.826 | NO | 0.739 | 0.720 | NO | Comparative example |
| 41 | 790 | 5860 | 0.135 | 1.921 | 0.852 | 0.833 | NO | 0.748 | 0.727 | NO | Comparative example |
| 42 | 660 | 5210 | 0.127 | 1.913 | 0.873 | 0.862 | NO | 0.769 | 0.755 | NO | Comparative example |
| 43 | 540 | 4540 | 0.119 | 1.920 | 0.870 | 0.837 | NO | 0.754 | 0.730 | NO | Comparative example |

(continued)

| Test number | Ls (mm) | La (mm) | $R_{SGB}$ | Magnetic flux density $B_8$ (T) | Evaluation result | | | | | | Remarks |
|---|---|---|---|---|---|---|---|---|---|---|---|
| | | | | | Before magnetic domain refinement treatment | | | After magnetic domain refinement treatment | | | |
| | | | | | Iron loss $W_{17/50}$ (W/kg) | WO | $W_{17/50} \leq W0$ | Iron loss $W_{17/50}$ (W/kg) | W1 | $W_{17/50} \leq W1$ | |
| 44 | 540 | 4480 | 0.121 | 1.918 | 0.849 | 0.844 | NO | 0.752 | 0.737 | NO | Comparative example |
| 45 | 520 | 5370 | 0.097 | 1.915 | 0.870 | 0.855 | NO | 0.774 | 0.748 | NO | Comparative example |
| 46 | 750 | 5940 | 0.126 | 1.922 | 0.847 | 0.830 | NO | 0.736 | 0.723 | NO | Comparative example |
| 47 | 550 | 4860 | 0.113 | 1.899 | 0.952 | 0.912 | NO | 0.813 | 0.804 | NO | Comparative example |
| 48 | 530 | 4940 | 0.107 | 1.904 | 0.948 | 0.894 | NO | 0.824 | 0.786 | NO | Comparative example |
| 49 | 570 | 4770 | 0.119 | 1.909 | 0.913 | 0.876 | NO | 0.784 | 0.769 | NO | Comparative example |
| 50 | 570 | 4780 | 0.119 | 1.906 | 0.934 | 0.887 | NO | 0.799 | 0.779 | NO | Comparative example |
| 51 | 590 | 4710 | 0.125 | 1.904 | 0.921 | 0.894 | NO | 0.819 | 0.786 | NO | Comparative example |
| 52 | 610 | 4890 | 0.125 | 1.908 | 0.919 | 0.880 | NO | 0.799 | 0.772 | NO | Comparative example |
| 53 | 50 | 510 | 0.098 | 1.864 | 1.089 | 1.037 | NO | 0.964 | 0.926 | NO | Comparative example |
| 54 | 130 | 1230 | 0.106 | 1.889 | 1.002 | 0.947 | NO | 0.881 | 0.839 | NO | Comparative example |
| 55 | 290 | 2480 | 0.117 | 1.894 | 0.949 | 0.930 | NO | 0.840 | 0.821 | NO | Comparative example |
| 56 | 420 | 3420 | 0.123 | 1.902 | 0.934 | 0.901 | NO | 0.811 | 0.793 | NO | Comparative example |

[(Test 2) Magnetic Flux Density Measurement Test]

A test specimen was taken from a central portion, in the sheet width direction, of the produced grain-oriented electrical steel sheet of each test number. The size of the test specimens was 100 mm × 500 mm × sheet thickness. A single-sheet magnetic property test (SST test) was conducted in accordance with JIS C2556:2015 to apply a magnetic field of 800 A/m to the test specimen and obtain the magnetic flux density $B_8$ (T). The obtained magnetic flux densities $B_8$ are shown in "Magnetic flux density $B_8$ (T)" in Table 2.

[(Test 3) Iron Loss Evaluation Test for Grain-Oriented Electrical Steel Sheet Before Magnetic Domain Refinement Treatment]

A test specimen was taken from a central portion, in the sheet width direction, of the grain-oriented electrical steel sheet of each test number. The size of the test specimens was 100 mm × 500 mm × sheet thickness. Using the test specimens, the iron losses $W_{17/50}$ (W/kg) when the frequency was 50 Hz and the maximum flux density was 1.7 T were obtained in accordance with JIS C2556:2015. The obtained iron losses $W_{17/50}$ are shown in "Iron loss $W_{17/50}$ (W/kg) before magnetic domain refinement" in Table 2. If the iron loss $W_{17/50}$ was the threshold value $WO = -3.571 \times B_8 + 7.693$ or less, it was determined that excellent iron loss was obtained in the grain-oriented electrical steel sheet before the magnetic domain refinement treatment.

[(Test 4) Iron Loss Evaluation Test for Grain-Oriented Electrical Steel Sheet After Magnetic Domain Refinement Treatment]

Magnetic domain refinement treatment using laser irradiation was performed on the grain-oriented electrical steel sheet of each test number to introduce linear heat-affected zones into the grain-oriented electrical steel sheet. In the magnetic domain refinement treatment using laser irradiation, the irradiation pitch was intervals of 4 mm. The energy density Ua was 1.25 mJ/mm$^2$.
A test specimen was taken from a central portion, in the sheet width direction, of the grain-oriented electrical steel sheet after the magnetic domain refinement treatment. The size of the test specimens was 100 mm × 500 mm × sheet thickness. Using the test specimens, the iron losses $W_{17/50}$ (W/kg) when the frequency was 50 Hz and the maximum flux density was 1.7 T were obtained in accordance with JIS C2556:2015. The obtained iron losses $W_{17/50}$ are shown in "Iron loss $W_{17/50}$ (W/kg) after magnetic domain refinement" in Table 2. If the iron loss $W_{17/50}$ was the threshold value $W1 = -3.500 \times B_8 + 7.450$ or less, it was determined that excellent iron loss was obtained in the grain-oriented electrical steel sheet after the magnetic domain refinement treatment.

[Evaluation Result]

Referring to Tables 1 and 2, the grain-oriented electrical steel sheets of the test numbers 1 to 31 satisfy Features 1 to 3. Therefore, all the magnetic flux densities $B_8$ were 1.910 T or more, and furthermore, all the iron losses $W_{17/50}$ before magnetic domain refinement treatment were the threshold value WO or less, indicating excellent iron losses before the magnetic domain refinement treatment. Furthermore, all the iron losses $W_{17/50}$ after magnetic domain refinement-treatment were the threshold value W1 or less. This indicates excellent iron loss characteristics not only before but also after the magnetic domain refinement-treatment.
On the other hand, the grain-oriented electrical steel sheets of the test numbers 32 to 46 do not satisfy Condition 8 in the production processes. In other words, the roll diameter difference between the upper and lower work rolls of the multi-stage rolling mill used in reverse rolling was less than 2.0 mm. Therefore, the small-angle grain boundary ratio $R_{SGB}$ was less than 0.140. As a result, the iron losses $W_{17/50}$ before magnetic domain refinement treatment exceeded the threshold value W0, and no sufficient iron losses before magnetic domain refinement treatment were obtained. Furthermore, the iron losses $W_{17/50}$ after magnetic domain refinement treatment exceeded the threshold value W1. This indicates that the iron loss characteristics were insufficient not only before but also after the magnetic domain refinement treatment.
The grain-oriented electrical steel sheet of the test number 47 does not satisfy Condition 2 in the production processes. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before the magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.
The grain-oriented electrical steel sheet of the test number 48 does not satisfy Condition 3 in the production processes. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.

The grain-oriented electrical steel sheet of the test number 49 does not satisfy Condition 6 in the production processes. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before the magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.

The grain-oriented electrical steel sheet of the test number 50 does not satisfy Condition 7 in the production processes. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before the magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.

The grain-oriented electrical steel sheet of the test number 51 does not satisfy Condition 4 in the production processes. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before the magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.

The grain-oriented electrical steel sheet of the test number 52 was subjected only to the reverse rolling process in the cold rolling process. Therefore, no sufficient magnetic flux density was obtained. Furthermore, the small-angle grain boundary ratio $R_{SGB}$ was less than 0.140. Therefore, the iron loss $W_{17/50}$ before magnetic domain refinement treatment exceeded the threshold value WO, and no sufficient iron loss was obtained before the magnetic domain refinement treatment. Furthermore, the iron loss $W_{17/50}$ after magnetic domain refinement treatment exceeded the threshold value W1, and the iron loss characteristics were insufficient not only before but also after the magnetic domain refinement treatment.

The grain-oriented electrical steel sheets of the test numbers 53 to 56 do not satisfy Condition 9 in the production processes. Therefore, no sufficient magnetic flux densities were obtained. Furthermore, the small-angle grain boundary ratios $R_{SGB}$ were less than 0.140. Therefore, the iron losses $W_{17/50}$ before magnetic domain refinement treatment exceeded the threshold value WO, and no sufficient iron losses were obtained before the magnetic domain refinement treatment. Furthermore, the iron losses $W_{17/50}$ after magnetic domain refinement treatment exceeded the threshold value W1, and the iron loss characteristics were insufficient not only before but also after the magnetic domain refinement treatment.

[EXAMPLE 2]

In Example 2, grain-oriented electrical steel sheets having chemical compositions shown in Tables 3 (Tables 3A and 3B) were produced.

[Table 3A]

TABLE 3A

| Test number | Chemical composition of grain-oriented electrical steel sheet (unit: mass%, the remainder being Fe and impurities) | | | | | | |
|---|---|---|---|---|---|---|---|
| | Si | Mn | N | C | Sol. Al | S | Se |
| 1 | 3.3 | 0.06 | <0.002 | 0.002 | <0.001 | <0.001 | <0.001 |
| 2 | 3.2 | 0.06 | <0.002 | 0.002 | <0.001 | <0.001 | <0.001 |
| 3 | 3.2 | 0.09 | <0.002 | 0.002 | <0.001 | <0.001 | <0.001 |
| 4 | 3.1 | 0.08 | <0.002 | 0.002 | <0.001 | <0.001 | <0.001 |
| 5 | 3.3 | 0.07 | <0.002 | 0.002 | <0.001 | <0.001 | <0.001 |
| 6 | 3.4 | 0.07 | <0.002 | 0.002 | <0.001 | <0.001 | <0.001 |

(continued)

| Test number | Chemical composition of grain-oriented electrical steel sheet (unit: mass%, the remainder being Fe and impurities) | | | | | | |
|---|---|---|---|---|---|---|---|
| | Si | Mn | N | C | Sol. Al | S | Se |
| 7 | 3.3 | 0.07 | <0.002 | 0.002 | <0.001 | <0.001 | <0.001 |
| 8 | 3.3 | 0.07 | <0.002 | 0.001 | <0.001 | <0.001 | <0.001 |
| 9 | 3.2 | 0.08 | <0.002 | 0.002 | <0.001 | <0.001 | <0.001 |
| 10 | 3.2 | 0.06 | <0.002 | 0.002 | <0.001 | <0.001 | <0.001 |
| 11 | 3.3 | 0.08 | <0.002 | 0.002 | <0.001 | <0.001 | <0.001 |
| 12 | 3.2 | 0.07 | <0.002 | 0.002 | <0.001 | <0.001 | <0.001 |

[Table 3B]

| Test number | Chemical composition of grain-oriented electrical steel sheet (unit: mass%, the remainder being Fe and impurities) | | | | | | | | |
|---|---|---|---|---|---|---|---|---|---|
| | Ti | Ni | Cr | Cu | P | Mo | Sn | Sb | Bi |
| 1 | 0.001 | 0.03 | 0.02 | - | 0.01 | - | 0.10 | 0.04 | 0.0001 |
| 2 | 0.002 | 0.03 | - | 0.07 | - | - | 0.05 | - | - |
| 3 | 0.002 | - | - | - | - | 0.05 | 0.10 | - | 0.0001 |
| 4 | 0.002 | 0.03 | 0.01 | - | - | - | 0.10 | 0.02 | - |
| 5 | 0.002 | - | 0.06 | - | 0.03 | - | - | 0.01 | - |
| 6 | 0.003 | - | - | 0.05 | - | 0.01 | 0.03 | - | 0.0001 |
| 7 | 0.001 | 0.04 | 0.02 | - | 0.01 | - | 0.15 | - | - |
| 8 | 0.002 | - | - | 0.04 | - | 0.02 | - | - | 0.0002 |
| 9 | 0.002 | 0.01 | 0.03 | - | 0.05 | - | - | - | - |
| 10 | 0.002 | - | - | 0.02 | - | 0.02 | - | - | - |
| 11 | 0.002 | 0.04 | 0.02 | - | - | - | - | - | - |
| 12 | 0.004 | - | - | - | - | 0.01 | - | - | - |

The numerical values with "<" in Tables 3 indicate that the measurement result was below the detection limit.

Specifically, a plurality of steel slabs having different chemical compositions were prepared. The chemical compositions of the steel slabs contained, in mass%, Si: 3.1 to 3.6%, Mn: 0.05 to 0.10%, N: 0.005 to 0.010%, C: 0.050 to 0.100%, sol. Al: 0.015 to 0.030%, one or more kinds of element selected from a group consisting of S and Se: 0.015 to 0.030% in total, Ti: 0.001 to 0.005%, Ni: 0.01 to 0.10%, Cr: 0.01 to 0.08%, Cu: 0.01 to 0.10%, P: 0.01 to 0.02%, Mo: 0.00 to 0.05%, Sn: 0.01 to 0.25%, Sb: 0.00 to 0.05%, and Bi: 0.0000 to 0.0120%, the remainder being Fe and impurities.

A hot rolling process was performed on the prepared steel slabs.
Specifically, the steel slab of each test number was heated to 1340°C in a heating furnace. Hot rolling was performed on the heated steel slab to produce hot-rolled steel sheets with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm. Specifically, a first cold rolling process was performed, and then a second cold rolling process was performed. Conditions 1 to 8 were as shown in Table 4.

[Table 4]

TABLE 4

| Test number | Cold rolling process | | | | | | | | | Decarburization annealing process |
| | First cold rolling process | | | Second cold rolling process | | | | | | |
| | Condition 1 | Condition 2 | Condition 3 | Condition 4 | Condition 5 | Condition 6 | Condition 7 | Condition 8 | Condition 9 |
| | Rolling method | Work roll diameter D1 (mm) | Rolling reduction ratio CR1 (%) | Heat treatment | Rolling method | Work roll diameter D2 (mm) | Rolling reduction ratio CR2 (%) | Roll diameter difference (mm) | Temperature increase rate HR (°C/sec) |
|---|---|---|---|---|---|---|---|---|---|
| 1 | Tandem | 400 | 78 | No | Reverse | 70 | 57 | Yes | 400 |
| 2 | Tandem | 400 | 65 | No | Reverse | 70 | 73 | Yes | 1300 |
| 3 | Tandem | 400 | 64 | No | Reverse | 80 | 73 | No | 1300 |
| 4 | Tandem | 600 | 71 | No | Reverse | 70 | 67 | No | 1300 |
| 5 | Reverse | 400 | 90 | - | - | - | - | - | 400 |
| 6 | Tandem | 150 | 66 | No | Reverse | 70 | 72 | Yes | 400 |
| 7 | Tandem | 400 | 22 | No | Reverse | 80 | 88 | Yes | 400 |
| 8 | Tandem | 400 | 65 | Yes | Reverse | 80 | 73 | Yes | 400 |
| 9 | Tandem | 600 | 66 | No | Tandem | 80 | 72 | Yes | 400 |
| 10 | Tandem | 400 | 66 | No | Reverse | 130 | 72 | Yes | 400 |
| 11 | Tandem | 400 | 89 | No | Reverse | 80 | 13 | Yes | 400 |
| 12 | Tandem | 400 | 76 | No | Reverse | 80 | 60 | Yes | 300 |

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rate HR when the temperature is increased from 400°C to 800°C was as described in the column "Condition 9, Temperature increase rate HR (°C/sec)" of "Decarburization annealing process" in Table 4.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the underlayer coatings. With the above-described production processes, the grain-oriented electrical steel sheets of the test numbers were produced.

The chemical composition of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers are shown in Tables 3 (Tables 3A and 3B).

[Evaluation Test]

Similar to Example 1, (Test 1) small-angle grain boundary ratio $R_{SGB}$ measurement test, (Test 2) magnetic flux density measurement test, (Test 3) iron loss evaluation test for grain-oriented electrical steel sheet before magnetic domain refinement treatment, and (Test 4) iron loss evaluation test for grain-oriented electrical steel sheet after magnetic domain refinement treatment were performed. The obtained results are shown in Table 5.

[Table 5]

TABLE 5

| Test number | Ls (mm) | La (mm) | $R_{SGB}$ | Magnetic flux density $B_8$ (T) | Evaluation result | | | | | | Remarks |
|---|---|---|---|---|---|---|---|---|---|---|---|
| | | | | | Before magnetic domain refinement treatment | | | After magnetic domain refinement treatment | | | |
| | | | | | Iron loss $W_{17/50}$ (W/kg) | W0 | $W_{17/50} \leq$ W0 | Iron loss $W_{17/50}$ (W/kg) | W1 | $W_{17/50} \leq$ W1 | |
| 1 | 740 | 4530 | 0.163 | 1.924 | 0.802 | 0.822 | YES | 0.714 | 0.716 | YES | Inventive example |
| 2 | 690 | 4810 | 0.143 | 1.921 | 0.817 | 0.833 | YES | 0.722 | 0.727 | YES | Inventive example |
| 3 | 630 | 4530 | 0.139 | 1.928 | 0.831 | 0.808 | NO | 0.704 | 0.702 | NO | Comparative example |
| 4 | 610 | 4450 | 0.137 | 1.926 | 0.822 | 0.815 | NO | 0.721 | 0.709 | NO | Comparative example |
| 5 | 620 | 4710 | 0.132 | 1.903 | 0.903 | 0.897 | NO | 0.799 | 0.790 | NO | Comparative example |
| 6 | 590 | 4340 | 0.136 | 1.905 | 0.901 | 0.890 | NO | 0.785 | 0.783 | NO | Comparative example |
| 7 | 510 | 4860 | 0.105 | 1.901 | 0.941 | 0.905 | NO | 0.811 | 0.797 | NO | Comparative example |
| 8 | 610 | 4820 | 0.127 | 1.899 | 0.933 | 0.912 | NO | 0.834 | 0.804 | NO | Comparative example |
| 9 | 560 | 4900 | 0.114 | 1.906 | 0.894 | 0.887 | NO | 0.821 | 0.779 | NO | Comparative example |
| 10 | 590 | 4740 | 0.124 | 1.903 | 0.913 | 0.897 | NO | 0.811 | 0.790 | NO | Comparative example |
| 11 | 580 | 4920 | 0.118 | 1.902 | 0.960 | 0.901 | NO | 0.803 | 0.793 | NO | Comparative example |
| 12 | 420 | 3780 | 0.111 | 1.899 | 0.983 | 0.912 | NO | 0.841 | 0.804 | NO | Comparative example |

**EP 4 647 523 A1**

Referring to Tables 3 and 5, the grain-oriented electrical steel sheets of the test numbers 1 and 2 satisfy Features 1 to 3. Therefore, the magnetic flux densities $B_8$ were 1.910 T or more, and furthermore, all the iron losses $W_{17/50}$ before magnetic domain refinement treatment were the threshold value WO or less, indicating excellent iron losses before the magnetic domain refinement treatment. Furthermore, all the iron losses $W_{17/50}$ after magnetic domain refinement treatment were the threshold value W1 or less. This indicates excellent iron loss characteristics not only before but also after the magnetic domain refinement treatment.

On the other hand, the grain-oriented electrical steel sheets of the test numbers 3 and 4 do not satisfy Condition 8 in the production processes. Therefore, the small-angle grain boundary ratios $R_{SGB}$ were less than 0.140. As a result, the iron losses $W_{17/50}$ before magnetic domain refinement treatment exceeded the threshold value WO, and no sufficient iron losses were obtained before the magnetic domain refinement treatment. Furthermore, the iron losses $W_{17/50}$ after magnetic domain refinement treatment exceeded the threshold value W1, and the iron loss characteristics were insufficient not only before but also after the magnetic domain refinement treatment.

The grain-oriented electrical steel sheets of the test numbers 5 to 12 do not satisfy any one of Conditions 1 to 7 and 9. Therefore, no sufficient magnetic flux densities were obtained. Furthermore, the small-angle grain boundary ratios $R_{SGB}$ were less than 0.140. Therefore, the iron losses $W_{17/50}$ before magnetic domain refinement treatment exceeded the threshold value WO, and no sufficient iron losses were obtained before magnetic domain refinement treatment. Furthermore, the iron losses $W_{17/50}$ after magnetic domain refinement treatment exceeded the threshold value W1, and the iron loss characteristics were insufficient not only before but also after the magnetic domain refinement treatment.

[EXAMPLE 3]

In Example 3, grain-oriented electrical steel sheets having chemical compositions shown in Table 6 (Tables 6A and 6B) were produced.

[Table 6A]

TABLE 6A

| Test number | Chemical composition of grain-oriented electrical steel sheet (unit: mass%, the remainder being Fe and impurities) | | | | | | |
|---|---|---|---|---|---|---|---|
| | Si | Mn | N | C | Sol. Al | S | Sc |
| 1 | 3.2 | 0.06 | <0.002 | 0.002 | <0.001 | <0.001 | - |
| 2 | 3.3 | 0.08 | <0.002 | 0.002 | <0.001 | <0.001 | <0.001 |
| 3 | 3.2 | 0.07 | <0.002 | 0.002 | <0.001 | <0.001 | <0.001 |
| 4 | 3.3 | 0.08 | <0.002 | 0.002 | <0.001 | <0.001 | - |
| 5 | 3.3 | 0.08 | <0.002 | 0.002 | <0.001 | <0.001 | - |
| 6 | 3.4 | 0.09 | <0.002 | 0.002 | <0.001 | <0.001 | - |
| 7 | 3.4 | 0.08 | <0.002 | 0.002 | <0.001 | <0.001 | - |
| 8 | 3.5 | 0.07 | <0.002 | 0.002 | <0.001 | <0.001 | - |
| 9 | 3.4 | 0.10 | <0.002 | 0.002 | <0.001 | <0.001 | - |
| 10 | 3.2 | 0.09 | <0.002 | 0.002 | <0.001 | <0.001 | - |
| 11 | 3.4 | 0.08 | <0.002 | 0.002 | <0.001 | <0.001 | - |
| 12 | 3.1 | 0.07 | <0.002 | 0.002 | <0.001 | <0.001 | - |
| 13 | 3.1 | 0.08 | <0.002 | 0.002 | <0.001 | <0.001 | - |
| 14 | 3.2 | 0.08 | <0.002 | 0.002 | <0.001 | <0.001 | - |
| 15 | 3.3 | 0.09 | <0.002 | 0.002 | <0.001 | <0.001 | - |
| 16 | 3.0 | 0.08 | <0.002 | 0.002 | <0.001 | <0.001 | - |
| 17 | 4.5 | 0.08 | <0.002 | 0.002 | <0.001 | <0.001 | - |
| 18 | 2.5 | 0.15 | 0.008 | 0.002 | <0.001 | 0.002 | - |

41

(continued)

| Test number | Chemical composition of grain-oriented electrical steel sheet (unit: mass%, the remainder being Fe and impurities) | | | | | | |
|---|---|---|---|---|---|---|---|
| | Si | Mn | N | C | Sol. Al | S | Sc |
| 19 | 3.3 | 1.00 | <0.002 | 0.003 | 0.004 | <0.001 | - |
| 20 | 2.6 | 0.01 | <0.002 | 0.002 | <0.001 | 0.003 | - |
| 21 | 2.6 | 0.05 | 0.010 | 0.002 | <0.001 | <0.001 | - |
| 22 | 2.6 | 0.25 | <0.002 | 0.010 | <0.001 | <0.001 | - |
| 23 | 3.2 | 0.54 | <0.002 | 0.010 | <0.001 | <0.001 | <0.001 |
| 24 | 3.2 | 0.10 | <0.002 | 0.006 | 0.010 | <0.001 | - |
| 25 | 3.6 | 0.88 | <0.002 | 0.004 | <0.001 | 0.010 | - |
| 26 | 3.6 | 0.13 | 0.004 | 0.010 | <0.001 | <0.001 | 0.010 |
| 27 | 3.6 | 0.05 | <0.002 | 0.003 | <0.001 | 0.009 | - |
| 28 | 3.5 | 0.08 | <0.002 | 0.002 | 0.004 | <0.001 | - |
| 29 | 3.5 | 0.07 | <0.002 | 0.004 | <0.001 | <0.001 | - |
| 30 | 3.9 | 0.13 | <0.002 | 0.006 | <0.001 | <0.001 | 0.006 |
| 31 | 4.3 | 0.44 | <0.002 | 0.003 | 0.008 | <0.001 | <0.001 |
| 32 | 4.1 | 0.23 | <0.002 | 0.002 | <0.001 | 0.008 | <0.001 |
| 33 | 4.4 | 0.92 | <0.002 | 0.002 | <0.001 | <0.001 | <0.001 |
| 34 | 3.8 | 0.48 | <0.002 | 0.002 | <0.001 | <0.001 | - |
| 35 | 3.4 | 0.64 | <0.002 | 0.002 | <0.001 | <0.001 | - |

[Table 6B]

TABLE 6B

| Test number | Chemical composition of grain-oriented electrical steel sheet (unit: mass%, the remainder being Fe and impurities) | | | | | | | | |
|---|---|---|---|---|---|---|---|---|---|
| | Ti | Ni | Cr | Cu | P | Mo | Sn | Sb | Bi |
| 1 | 0.002 | - | - | - | - | - | - | - | - |
| 2 | 0.002 | - | - | - | - | - | - | - | - |
| 3 | 0.002 | - | - | - | 0.02 | - | - | - | - |
| 4 | 0.003 | - | - | - | - | - | 0.10 | - | - |
| 5 | 0.002 | - | - | - | - | - | - | 0.04 | - |
| 6 | 0.002 | - | 0.08 | - | - | - | - | - | - |
| 7 | 0.002 | - | - | 0.07 | - | - | - | - | - |
| 8 | 0.002 | 0.04 | - | - | - | 0.02 | - | - | - |
| 9 | 0.003 | - | - | - | - | - | - | - | 0.0002 |
| 10 | 0.002 | 0.05 | - | - | - | - | 0.06 | - | - |
| 11 | 0.002 | - | - | - | 0.01 | - | - | 0.02 | - |
| 12 | 0.004 | - | 0.06 | 0.05 | - | - | - | - | - |
| 13 | 0.002 | - | 0.05 | - | - | - | 0.12 | - | - |

(continued)

| Test number | Chemical composition of grain-oriented electrical steel sheet (unit: mass%, the remainder being Fe and impurities) | | | | | | | | |
|---|---|---|---|---|---|---|---|---|---|
| | Ti | Ni | Cr | Cu | P | Mo | Sn | Sb | Bi |
| 14 | 0.002 | - | - | 0.07 | - | - | - | - | 0.0001 |
| 15 | 0.002 | - | 0.08 | - | 0.02 | - | - | 0.01 | 0.0001 |
| 16 | 0.002 | 0.02 | 0.03 | 0.05 | 0.01 | 0.03 | 0.08 | - | - |
| 17 | 0.001 | - | - | - | - | - | - | - | 0.0024 |
| 18 | 0.001 | - | 0.54 | 0.25 | 0.44 | - | - | - | - |
| 19 | 0.002 | 0.04 | - | - | - | 0.08 | - | 0.24 | - |
| 20 | 0.003 | - | 0.06 | - | 0.02 | - | - | - | - |
| 21 | 0.003 | - | 0.04 | - | - | - | 0.18 | - | - |
| 22 | 0.004 | - | - | 0.44 | - | - | - | - | - |
| 23 | 0.003 | 0.02 | - | - | 0.05 | - | - | - | 0.0011 |
| 24 | 0.006 | - | 0.24 | - | - | 0.03 | 0.33 | - | - |
| 25 | 0.004 | - | - | - | - | - | - | 0.48 | - |
| 26 | 0.003 | - | 0.08 | 0.21 | - | - | - | - | - |
| 27 | 0.010 | - | - | - | 0.18 | - | - | - | 0.0252 |
| 28 | 0.002 | 1.00 | - | 0.68 | - | 0.02 | - | - | - |
| 29 | 0.001 | - | 1.00 | - | - | - | 0.10 | - | - |
| 30 | 0.005 | - | - | 1.00 | - | 0.02 | - | 0.11 | - |
| 31 | 0.005 | - | 0.10 | - | 0.50 | - | - | - | - |
| 32 | 0.003 | - | - | 0.88 | - | 0.10 | - | - | 0.0008 |
| 33 | 0.003 | 0.09 | 0.86 | - | - | - | 0.50 | - | - |
| 34 | 0.004 | - | - | 0.24 | 0.38 | - | - | 0.50 | - |
| 35 | 0.005 | - | 0.24 | - | - | 0.02 | 0.10 | - | 0.0500 |

Steel slabs of test numbers were prepared and a hot rolling process was performed on the steel slabs. Specifically, the steel slab of each test number was heated to 1340°C in a heating furnace. Hot rolling was performed on the heated steel slab to produce a hot-rolled steel sheet with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds.

After the hot-rolled sheet annealing process, a cold rolling process was performed to produce cold-rolled steel sheets with a thickness of 0.22 mm. Specifically, a tandem rolling process was first performed on the hot-rolled steel sheets to produce intermediate steel sheets. The average diameter D1 of the work rolls in the tandem rolling was 450 mm, and the cumulative rolling reduction ratio CR1 was 65%. A reverse rolling process was performed without performing heat treatment on the intermediate steel sheets. The average diameter of the work rolls in the reverse rolling process was 75 mm, and the cumulative rolling reduction ratio CR2 was 73%. Furthermore, the roll diameter difference between the upper and lower work rolls of the reverse rolling mill was 2.0 mm or more. With the above-described processes, cold-rolled steel sheets with the sheet thickness of 0.22mm were produced.

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rate HR when the temperature is increased from 400°C to 800°C was 800°C/sec.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature in the finishing annealing was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the primary coatings. With the above-described production processes, the grain-oriented electrical steel sheets of the test numbers were produced. Note that the chemical compositions of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers are shown in Tables 6 (Tables 6A and 6B).

[Evaluation Test]

Similar to Example 1, (Test 1) small-angle grain boundary ratio $R_{SGB}$ measurement test, (Test 2) magnetic flux density measurement test, (Test 3) iron loss evaluation test for grain-oriented electrical steel sheet before magnetic domain refinement treatment, and (Test 4) iron loss evaluation test for grain-oriented electrical steel sheet after magnetic domain refinement treatment were performed. The obtained results are shown in Table 7.

[Table 7]

TABLE 7

| Test number | Ls (mm) | La (mm) | $R_{SGB}$ | Magnetic flux density $B_8$ (T) | Before magnetic domain refinement treatment | | | After magnetic domain refinement treatment | | | Remarks |
|---|---|---|---|---|---|---|---|---|---|---|---|
| | | | | | Iron loss $W_{17/50}$ (W/kg) | W0 | $W_{17/50} \leq$ W0 | Iron loss $W_{17/50}$ (W/kg) | W1 | $W_{17/50} \leq$ W1 | |
| 1 | 750 | 4620 | 0.162 | 1.922 | 0.799 | 0.830 | YES | 0.696 | 0.723 | YES | Inventive example |
| 2 | 740 | 4550 | 0.163 | 1.922 | 0.799 | 0.830 | YES | 0.696 | 0.723 | YES | Inventive example |
| 3 | 780 | 4810 | 0.162 | 1.924 | 0.799 | 0.822 | YES | 0.696 | 0.716 | YES | Inventive example |
| 4 | 740 | 4770 | 0.155 | 1.919 | 0.784 | 0.840 | YES | 0.694 | 0.734 | YES | Inventive example |
| 5 | 730 | 4360 | 0.167 | 1.927 | 0.782 | 0.812 | YES | 0.683 | 0.706 | YES | Inventive example |
| 6 | 710 | 4490 | 0.158 | 1.923 | 0.795 | 0.826 | YES | 0.704 | 0.720 | YES | Inventive example |
| 7 | 770 | 4690 | 0.164 | 1.925 | 0.801 | 0.819 | YES | 0.699 | 0.713 | YES | Inventive example |
| 8 | 800 | 5110 | 0.157 | 1.921 | 0.788 | 0.833 | YES | 0.711 | 0.727 | YES | Inventive example |
| 9 | 750 | 4420 | 0.170 | 1.932 | 0.788 | 0.794 | YES | 0.678 | 0.688 | YES | Inventive example |
| 10 | 770 | 4990 | 0.154 | 1.918 | 0.763 | 0.844 | YES | 0.704 | 0.737 | YES | Inventive example |

(continued)

| Test number | Evaluation result | | | | | | | | | | Remarks |
| --- | --- | --- | --- | --- | --- | --- | --- | --- | --- | --- | --- |
| | Ls (mm) | La (mm) | $R_{SGB}$ | Magnetic flux density $B_8$ (T) | Before magnetic domain refinement treatment | | | After magnetic domain refinement treatment | | | |
| | | | | | Iron loss $W_{17/50}$ (W/kg) | W0 | $W_{17/50} \leq$ WO | Iron loss $W_{17/50}$ (W/kg) | W1 | $W_{17/50} \leq$ W1 | |
| 11 | 740 | 4440 | 0.167 | 1.926 | 0.769 | 0.815 | YES | 0.689 | 0.709 | YES | Inventive example |
| 12 | 740 | 4510 | 0.164 | 1.923 | 0.788 | 0.826 | YES | 0.707 | 0.720 | YES | Inventive example |
| 13 | 850 | 5330 | 0.159 | 1.918 | 0.804 | 0.844 | YES | 0.718 | 0.737 | YES | Inventive example |
| 14 | 800 | 4680 | 0.171 | 1.929 | 0.799 | 0.805 | YES | 0.683 | 0.699 | YES | Inventive example |
| 15 | 780 | 4730 | 0.165 | 1.927 | 0.800 | 0.812 | YES | 0.694 | 0.706 | YES | Inventive example |
| 16 | 740 | 4620 | 0.160 | 1.923 | 0.804 | 0.826 | YES | 0.699 | 0.720 | YES | Inventive example |
| 17 | 690 | 4240 | 0.163 | 1.924 | 0.811 | 0.822 | YES | 0.704 | 0.716 | YES | Inventive example |
| 18 | 620 | 4160 | 0.149 | 1.914 | 0.792 | 0.858 | YES | 0.722 | 0.751 | YES | Inventive example |
| 19 | 780 | 4810 | 0.162 | 1.923 | 0.811 | 0.826 | YES | 0.698 | 0.720 | YES | Inventive example |
| 20 | 920 | 5320 | 0.173 | 1.931 | 0.768 | 0.797 | YES | 0.691 | 0.692 | YES | Inventive example |
| 21 | 770 | 4800 | 0.160 | 1.922 | 0.804 | 0.830 | YES | 0.694 | 0.723 | YES | Inventive example |
| 22 | 1140 | 6410 | 0.178 | 1.934 | 0.762 | 0.787 | YES | 0.667 | 0.681 | YES | Inventive example |
| 23 | 850 | 4821 | 0.176 | 1.934 | 0.778 | 0.787 | YES | 0.668 | 0.681 | YES | Inventive example |
| 24 | 700 | 4430 | 0.158 | 1.922 | 0.801 | 0.830 | YES | 0.701 | 0.723 | YES | Inventive example |
| 25 | 960 | 5430 | 0.177 | 1.934 | 0.774 | 0.787 | YES | 0.668 | 0.681 | YES | Inventive example |
| 26 | 910 | 5670 | 0.160 | 1.922 | 0.807 | 0.830 | YES | 0.704 | 0.723 | YES | Inventive example |
| 27 | 750 | 5220 | 0.144 | 1.910 | 0.832 | 0.872 | YES | 0.754 | 0.765 | YES | Inventive example |
| 28 | 880 | 5430 | 0.162 | 1.924 | 0.804 | 0.822 | YES | 0.703 | 0.716 | YES | Inventive example |
| 29 | 950 | 5220 | 0.182 | 1.938 | 0.771 | 0.772 | YES | 0.644 | 0.667 | YES | Inventive example |
| 30 | 920 | 4820 | 0.191 | 1.933 | 0.751 | 0.790 | YES | 0.664 | 0.685 | YES | Inventive example |

(continued)

| Test number | Ls (mm) | La (mm) | $R_{SGB}$ | Magnetic flux density $B_8$ (T) | Evaluation result | | | | | | Remarks |
|---|---|---|---|---|---|---|---|---|---|---|---|
| | | | | | Before magnetic domain refinement treatment | | | After magnetic domain refinement treatment | | | |
| | | | | | Iron loss $W_{17/50}$ (W/kg) | W0 | $W_{17/50} \leq$ WO | Iron loss $W_{17/50}$ (W/kg) | W1 | $W_{17/50} \leq$ W1 | |
| 31 | 750 | 4468 | 0.168 | 1.928 | 0.78 | 0.808 | YES | 0.689 | 0.702 | YES | Inventive example |
| 32 | 700 | 3990 | 0.175 | 1.934 | 0.784 | 0.787 | YES | 0.661 | 0.681 | YES | Inventive example |
| 33 | 680 | 4180 | 0.163 | 1.924 | 0.804 | 0.822 | YES | 0.683 | 0.716 | YES | Inventive example |
| 34 | 680 | 4320 | 0.157 | 1.921 | 0.821 | 0.833 | YES | 0.725 | 0.727 | YES | Inventive example |
| 35 | 580 | 3980 | 0.146 | 1.912 | 0.834 | 0.865 | YES | 0.734 | 0.758 | YES | Inventive example |

[Test Results]

Referring to Tables 6 and 7, all the grain-oriented electrical steel sheets of the test numbers 1 to 35 satisfy Features 1 to 3. Therefore, all the magnetic flux densities $B_8$ were 1.910 T or more, and furthermore, the iron losses $W_{17/50}$ before magnetic domain refinement treatment were the threshold value WO or less, indicating excellent iron losses before the magnetic domain refinement treatment. Furthermore, all the iron losses $W_{17/50}$ after magnetic domain refinement treatment were the threshold value W1 or less. This indicates excellent iron losses not only before but also after the magnetic domain refinement treatment.

An embodiment of the present disclosure has been described above. However, the embodiment described above is merely an example for carrying out the present disclosure. Therefore, the present disclosure is not limited to the above-described embodiment, and can be implemented by appropriately modifying the above embodiment within a range that does not depart from the gist of the present disclosure.

REFERENCE SIGNS LIST

10  Base steel sheet
11  Underlayer coating
12  Secondary coating

**Claims**

1.  A grain-oriented electrical steel sheet comprising:

    a base steel sheet,
    wherein a chemical composition of the base steel sheet contains, in mass%:

    Si: 2.5 to 4.5%,
    Mn: 0.01 to 1.00%,
    N: 0 to 0.010%,
    C: 0% to 0.010%,
    sol. Al: 0 to 0.010%,
    one or more kinds of element selected from a group consisting of S and Se: 0 to 0.010% in total,
    Ti: more than 0 to 0.010%,

Ni: 0 to 1.00%,
Cr: 0 to 1.00%,
Cu: 0 to 1.00%,
P: 0 to 0.50%,
Mo: 0 to 0.10%,
Sn: 0 to 0.50%,
Sb: 0 to 0.50%,
Bi: 0 to 0.0500%, and
the remainder including Fe and impurities,
when, by measuring crystal orientations at measurement points on a surface of the grain-oriented electrical steel sheet that are located at a pitch of 2 mm in a first direction and in a second direction perpendicular to the first direction using an X-ray diffraction method, misorientations of grain boundaries of crystal grains are obtained, a total length of the grain boundaries of the crystal grains is defined as La, and a total length of grain boundaries with misorientations of 1 to 5° is defined as Ls, Formula (1):

$$\mathrm{Ls/La} \geq 0.140 \qquad (1)$$

is satisfied, and
a magnetic flux density $B_8$ is 1.910 T or more.

2. The grain-oriented electrical steel sheet according to claim 1,
wherein the chemical composition contains one or more kinds of element selected from a group consisting of, in mass%:

Ni: 0.01 to 1.00%,
Cr: 0.01 to 1.00%,
Cu: 0.01 to 1.00%,
P: 0.01 to 0.50%,
Mo: 0.01 to 0.10%,
Sn: 0.01 to 0.50%,
Sb: 0.01 to 0.50%, and
Bi: 0.0001 to 0.0500%.

3. The grain-oriented electrical steel sheet according to claim 1 or 2, further comprising:
a plurality of linear heat-affected zones or grooves formed in the surface of the grain-oriented electrical steel sheet, the plurality of linear heat-affected zones or grooves extending in a linear fashion and being aligned in a direction perpendicular to the extending direction.

FIG.1

Rolled surface normal direction axis

α

<001>

{110}<001>

Rolling direction axis

γ

<001>

β

Rolling-perpendicular direction axis

FIG.2

## FIG.3

Iron loss $W_{17/50}$ (W/kg) before magnetic domain refinement treatment

| Pattern 1 | Pattern 2 | Pattern 3 | Pattern 4 |
| with roll diameter difference | without roll diameter difference | with roll diameter difference | without roll diameter difference |
| Tandem + Reverse | | Reverse | |

## FIG.4

Iron loss $W_{17/50}$ (W/kg) after magnetic domain refinement treatment

| Pattern 1 | Pattern 2 | Pattern 3 | Pattern 4 |
| with roll diameter difference | without roll diameter difference | with roll diameter difference | without roll diameter difference |
| Tandem + Reverse | | Reverse | |

FIG.5

FIG.6

FIG.7

50mm

— 1 to 5° —— more than 5 to 180°

FIG.8

FIG. 9

1

W
L
T

12
11
10
11
12

# FIG. 10

# FIG. 11

## INTERNATIONAL SEARCH REPORT

| International application No. |
|---|
| **PCT/JP2024/000087** |

**A. CLASSIFICATION OF SUBJECT MATTER**

*C22C 38/00*(2006.01)i; *C22C 38/60*(2006.01)i; *H01F 1/147*(2006.01)i; *C21D 8/12*(2006.01)n; *C21D 9/46*(2006.01)n
FI:  C22C38/00 303U; C22C38/60; H01F1/147 175; C21D8/12 B; C21D8/12 D; C21D9/46 501B

According to International Patent Classification (IPC) or to both national classification and IPC

**B. FIELDS SEARCHED**

Minimum documentation searched (classification system followed by classification symbols)

C22C38/00-C22C38/60; H01F1/147; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-123755 A (NIPPON STEEL CORPORATION) 30 August 2021 (2021-08-30) claims, paragraphs [0051]-[0057], [0115], [0171]-[0184], example 1 | 1-3 |
| A | JP 2020-169374 A (NIPPON STEEL CORPORATION) 15 October 2020 (2020-10-15) entire text, all drawings | 1-3 |
| A | WO 2020/027219 A1 (NIPPON STEEL CORPORATION) 06 February 2020 (2020-02-06) entire text, all drawings | 1-3 |
| A | JP 2003-266102 A (NIPPON STEEL CORPORATION) 24 September 2003 (2003-09-24) entire text, all drawings | 1-3 |
| A | CN 103278517 A (CENTRAL IRON & STEEL RESEARCH INSTITUTE) 04 September 2013 (2013-09-04) entire text, all drawings | 1-3 |
| P, A | JP 2023-155059 A (NIPPON STEEL CORPORATION) 20 October 2023 (2023-10-20) entire text, all drawings | 1-3 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/000087**

| Patent document cited in search report | | | Publication date (day/month/year) | Patent family member(s) | | | Publication date (day/month/year) |
|---|---|---|---|---|---|---|---|
| JP | 2021-123755 | A | 30 August 2021 | (Family: none) | | | |
| JP | 2020-169374 | A | 15 October 2020 | (Family: none) | | | |
| WO | 2020/027219 | A1 | 06 February 2020 | US | 2022/0372589 | A1 | |
| | | | | entire text, all drawings | | | |
| | | | | EP | 3831977 | A1 | |
| | | | | CN | 112513305 | A | |
| | | | | KR | 10-2021-0024076 | A | |
| | | | | BR | 112021000333 | A2 | |
| | | | | RU | 2764622 | C1 | |
| JP | 2003-266102 | A | 24 September 2003 | (Family: none) | | | |
| CN | 103278517 | A | 04 September 2013 | (Family: none) | | | |
| JP | 2023-155059 | A | 20 October 2023 | (Family: none) | | | |

Form PCT/ISA/210 (patent family annex) (July 2022)

**EP 4 647 523 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018048377 A
- JP 2001192785 A